(19)

Europäisches Patentamt

European Patent Office

Office européen des brevets

(11) **EP 4 760 601 A1**

(12) **EUROPEAN PATENT APPLICATION**

(43) Date of publication:
**17.06.2026   Bulletin 2026/25**

(21) Application number: **25220333.6**

(22) Date of filing: **03.12.2025**

(51) International Patent Classification (IPC):
$G06N\ 3/09^{(2023.01)}$   $G06N\ 3/084^{(2023.01)}$
$G06N\ 3/045^{(2023.01)}$   $G06N\ 3/0475^{(2023.01)}$
$G06N\ 3/048^{(2023.01)}$   $G06N\ 5/01^{(2023.01)}$

(52) Cooperative Patent Classification (CPC):
**G06N 3/09; G06N 3/084;** G06N 3/045;
G06N 3/0475; G06N 3/048; G06N 5/01

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:   **12.12.2024   US 202463733437 P
31.03.2025   US 202519096528**

(71) Applicant: **Microsoft Technology Licensing, LLC
Redmond, WA 98052-6399 (US)**

(72) Inventors:
• **MA, Chao**
  **Redmond, 98052-6399 (US)**
• **NORI, Aditya**
  **Redmond, 98052-6399 (US)**
• **GONG, Wenbo**
  **Redmond, 98052-6399 (US)**
• **SCETBON, Meyer**
  **Redmond, 98052-6399 (US)**
• **MEEDS, Edward**
  **Redmond, 98052-6399 (US)**

(74) Representative: **Page White Farrer
Bedford House
21a John Street
London WC1N 2BF (GB)**

(54) **MEMORY EFFICIENT MACHINE LEARNING MODEL TRAINING**

(57)     Various strategies for training a machine learning model are provided. One method computes a gradient matrix of a training loss function and applies a whitening transformation. Gradient normalization and whitening are employed to update weight vectors solely based on current gradient information without the need for exponential moving averages. A second method determines a state matrix to derive a truncated basis matrix composed of selected principal eigenvectors and additional orthogonal vectors and calculates an updated weight by projecting the gradient onto this low-dimensional subspace.

FIG. 1

**EP 4 760 601 A1**

**Description**

TECHNICAL FIELD

The present disclosure pertains to memory-efficient techniques for training machine learning (ML) models, and particularly large models (e.g., with billions, tens of billions, or hundreds of billions of weights or more).

BACKGROUND

In the field of artificial intelligence (AI), large models, such as large language models (LLMs) and foundation models, have become increasingly prevalent in various applications, including natural language processing, image recognition, image generation, video analysis, code synthesis, audio processing, audio synthesis and multi-modal tasks. These models require substantial computational resources and memory, particularly during the training phase. In particular, state-of-the-art optimization methods require significant memory overhead to retain state data between training steps, particularly for large models.

Machine learning models include numerous trainable parameters also known as weights, which are variables of a model that are adjusted during training based on training data. A typical training setup uses a training loss function that measures error between model outputs generated on a training set and corresponding ground truth outputs. The parameters are repeatedly updated with the objective of minimizing the error, for example minimising or maximizing the training loss function depending on how it is defined. So-called large models may have billions of parameters, or tens or hundreds of billions, for example. Gradient-based approaches optimizing the training loss function over multiple training steps based on a gradient of the training loss function computed with respect to each parameter under training in each training step (meaning a gradient is computed per parameter per training step).

State-of-the-art optimizers, such as Stochastic Gradient Descent (SGD), RMSprop, and Adam, play an important role in training ML models. Among these, Adam is popular due to its adaptive learning rate for each parameter, which enhances convergence speed and training stability. Adam employs element-wise adaptive learning rates, meaning that each parameter has its own learning rate that adjusts based on the historical gradient information. This makes Adam effective for a wide range of ML tasks by allowing more precise and efficient updates to the model parameters.

Exponential Moving Average (EMA) is a technique used in Adam to smooth the parameter updates, which helps in stabilizing the training process and improving performance of the trained model. EMA works by maintaining a moving average of the model parameters, which is updated at each iteration based on a decay rate. This moving average acts as a regularizer, reducing variance of the parameter updates and leading to more stable and reliable training.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Nor is the claimed subject matter limited to implementations that solve any or all of the disadvantages noted herein.

Various strategies for training a machine learning model are provided. One method computes a gradient matrix of a training loss function and applies a whitening transformation. Gradient normalization and whitening are employed to update weight vectors solely based on current gradient information without the need for exponential moving averages. A second method determines a state matrix to derive a truncated basis matrix composed of selected principal eigenvectors and additional orthogonal vectors and calculates an updated weight by projecting the gradient onto this low-dimensional subspace.

BRIEF DESCRIPTION OF FIGURES

Example embodiments will now be described with reference to the accompanying figures, in which:

FIG. 1 shows an overview of gradient whitening;

FIG. 2A shows a flow diagram illustrating a first example optimization algorithm;

FIG. 2B shows a collection of empirical results for a first example optimization algorithm;

FIG. 3 shows an overview of subspace switching;

FIG. 4 shows a flow diagram illustrating a second example optimization algorithm;

FIG. 5 shows a block diagram of an example computer system.

DETAILED DESCRIPTION

One issue addressed herein is that of improved memory efficiency of optimization steps performed iteratively during model training. Embodiments reduce the amount of memory overhead (in relation to model size) required to achieve state of the art optimization performance. Current hardware constraints, in particular limited available memory on accelerator processors like Graphics Processing Units (GPUs) and Tensor Processing Units (TPUs), limit progress in training large ML models. For instance, the memory capacity of these processors restricts the maximum model size and batch size that can be used during training, impacting both training performance and efficiency. Batch training is a common approach in training ML models, where the training data is divided into batches, and the model parameters are updated iteratively based on each batch. This method helps in managing memory usage and computational load by processing smaller subsets of data at a time, which is particularly beneficial when dealing with large datasets and limited hardware resources. However, batch training can also have drawbacks, such as increased training time and potential instability in the training process due to variability between batches. Those issues can be mitigated by enlarging batch sizes. However, the maximum batch size is limited by the available processor memory.

Various example memory-efficient training methods are described herein, which enable larger models and/or larger batch sizes to be accommodated within current hardware constrained. The described methods achieve improved memory efficiency in training without materially compromising (and in some cases even improving) performance.

In this context, performance has several aspects. One important measure of performance is training convergence time, meaning the number of training steps to achieve a given level of model performance. Methods described herein are able to achieve convergence (final model performance) not only with greater memory efficiency but in fewer training steps than state of the art methods (in other words, with both improved time and memory efficiency). Moreover, they are able to achieve better final model performance (e.g., as measured by validation perplexity) than state of the art optimization methods such as Adam, and do so with significantly greater memory efficiency in training (in other words, saving memory in training while achieving better accuracy than e.g., Adam). Other examples of model performance metrics include accuracy, precision, recall, F1 score, and other relevant performance indicators depending on the specific task (e.g., classification, regression, image generation). High-quality performance means the model makes accurate predictions, generates high quality data or otherwise performs its intended task or tasks effectively.

Another important training performance measure is stability of training. This refers to the consistency and reliability of the training process. Stable training means the model's performance improves steadily without significant fluctuations or instability, which can be caused by issues like vanishing or exploding gradients.

The present disclosure recognizes EMA as a source of memory inefficiency in modern adaptive optimizers such as Adam. EMA requires additional memory to store the moving averages of training gradients, which can be substantial for large models. This is because EMA necessitates retaining a history of past gradient values within a moving window to compute the averages, leading to increased memory usage. The memory requirements of EMA are significant because it necessitates storing multiple previous gradient values to calculate the moving average. Specifically, EMA requires retaining a history of past gradient values within a moving window to compute the averages, which can be substantial for large models with many parameters. For large models, this can mean storing many billions of past gradients, as a gradient is computed for every parameter under training. Eliminating or reducing the need to store past gradients therefore yields a very significant memory saving in training.

There is a perception that EMA is essential for maintaining training performance, defined as the model's ability to learn effectively and generalize well to new data. This perception extends to the belief that EMA is crucial for the performance of Adam and other modern adaptive optimizers. Therefore, the prevailing view is that removing EMA would materially degrade training performance due to the loss of the stabilizing effect provided by the moving averages.

The present disclosure describes multiple methods to address this issue. These methods eliminate the need for EMA while maintaining, or even improving, training performance (in particular, without compromising training stability, final model performance or convergence time).

Training methods and optimization methods for use in training are described. Such methods are used to train an ML model based on a training loss function and a training set.

Method 1

A first example method described herein substitutes EMA with gradient whitening and/or gradient normalization. Gradient normalization normalizes training gradients using statistics computed within a single training step, reducing noise without the need for past gradients. Gradient whitening removes or reduces correlations between weight vector dimensions. Example embodiments use gradient normalization and gradient whitening to stabilize the training process in manner comparable to EMA. However, they do so without the high memory overhead required for EMA, as both gradient normalization and whitening can be implemented using only the gradients from the current training step (whereas EMA requires gradients from previous timesteps to be retained).

A particular benefit of the first method is its ability to stabilize adaptive learning methods but with significantly reduced memory overhead compared to EMA.

According to a first aspect disclosed herein, a computer-implemented method of training a machine learning (ML) model comprises a training step implemented as follows. A gradient matrix of a training loss function with respect to a weight matrix of the ML model is computed (e.g., based on a training set). A whitening transformation is applied to the weight matrix, resulting in a whitened gradient matrix. An updated weight matrix is calculated based on the weight matrix and the whitened gradient matrix. A trained ML model is generated based on the updated gradient matrix.

In embodiments, the method comprises multiple such training steps, with a second training step applied to the updated weight matrix as computed in a previous first training step.

In one example, the trained ML model comprises the updated weight matrix. In another example, the trained ML model is otherwise derived from the updated weight matrix, e.g., via one or more additional training steps applied to the updated weight matrix.

The method of the first aspect can be equivalently expressed as the following operations: computing a first gradient vector of a training loss function with respect to a first weight vector of the ML model; computing a second gradient vector of the training loss function with respect to a second weight vector of the ML model; applying, to the first gradient vector and the second gradient vector, a whitening transformation, resulting in a first whitened gradient vector and a second whitened gradient vector; calculating an updated first weight vector based on the first weight vector and the first whitened gradient vector; calculating an updated second weight vector based on the second weight vector and the second whitened gradient vector; and generating a trained ML model based on the updated first weight vector and the updated second weight vector.

The first and second gradient vectors are first and second rows of the gradient matrix, or first and second columns depending on how it is defined. The gradient matrix may comprise additional gradient vectors (rows/columns). Whitening is applied on the full gradient matrix.

Expressed in these terms, in embodiments that apply whitening to normalized gradients, the gradient matrix is a normalized gradient matrix, and the method comprises computing an unnormalized gradient matrix of the training loss function with respect to the weight matrix; and applying, to the unnormalized gradient matrix, a normalizing transformation, resulting in the normalized gradient matrix.

Gradient normalization normalizes the gradient matrix based on a mean and variance of the gradient matrix, which does not require gradients to be retained from previous time steps. More generally, gradient normalization can be applied across the direction of rows of the gradient matrix, the columns of the gradient matrix, or across both the rows and the columns.

Unless otherwise indicated, in the specific context of the first method, a vector means a multi-dimensional vector having two or more components or, in other words, defined in a vector space having two or more vector dimensions, denoted mathematically as $\mathbb{R}^m$ where m $\geq$ 2. Likewise, unless otherwise indicated, in the specific context of the first method, a gradient matrix means a multi-vector matrix comprising two or more gradient vectors (rows or columns depending on how it is defined). Hence, unless otherwise indicated, in the specific context of the first method, a gradient matrix has dimensions m $\times$ n (gradient vectors defined as rows) or m $\times$ n (gradient vectors defined as columns) where *n* (the number of gradient vectors) is also two or greater.

A whitening transformation means a transformation applied to multiple vectors such that each transformed ("whitened") vector is decorrelated across its multiple dimensions. Two vector dimensions are said to be decorrelated from each other when a covariance between those vectors is substantially (exactly or approximately) equal to zero. Given a set of multiple weight vectors, there is a standard method for calculating a covariance matrix for the set (essentially, an extension of the concept variance to multi-dimensional data points described by vectors). A set of n vectors each of dimension m has a symmetric covariance matrix of size m $\times$ m. Each vector dimension (also known as a variable) corresponds to a diagonal element of the covariance matrix, which is the variance of that dimension. Each off-diagonal element of the covariance matrix corresponds to a pair of vector dimensions, which is the covariance between those dimensions: the covariance between the ith and jth dimensions is given by element (i,j) of the covariance matrix, equal to element (j,i) as the covariance matrix is symmetric.

Gradient whitening operation treats the entire "raw" gradient matrix (prior to whitening) as a single object, and globally applies whitening on the entire gradient matrix. Under one definition, the whitened matrix is given by Equation (2) below. In some implementations, Equation (3) is used to approximate Equation (2) in a more computationally efficient manner than applying Equation (2) directly. Intuitively, Equation (2) means that the whitening operation simply chooses from a set of all possible orthogonal matrices, and returns the one that is closest to the raw gradient matrix.

Note that whitening can be defined in multiple additional ways, all of which are equivalent.

Under a first equivalent definition, given a raw gradient matrix G, the whitening operation selects from the set of all possible orthogonal matrices, and returns the one that is closest to the raw gradient matrix G.

Under a second equivalent definition, given a raw gradient matrix G, the whitening operation transforms the raw gradient matrix identity such that a sample covariance of the whitened gradient matrix is an identity matrix. Denoting the transformation by G ← GradWhitening (G), the sample covariance is defined as $GG^T$ (the whitened gradient matrix multiplied by its transpose).

Under a third equivalent definition, given a raw gradient matrix G, the whitening operation reduces a condition number of G to be 1. Here, the condition number is defined as a ratio of a largest eigen value of G to a smallest eigen value of G. A large condition number means G is less "well-behaved", hence more difficult to work with. A condition number = 1 is the smallest condition number it is possible to achieve. Hence, the whitened gradient is the "most well-behaved" version of the raw gradient G. "Well-behaved" in this context refers to training stability.

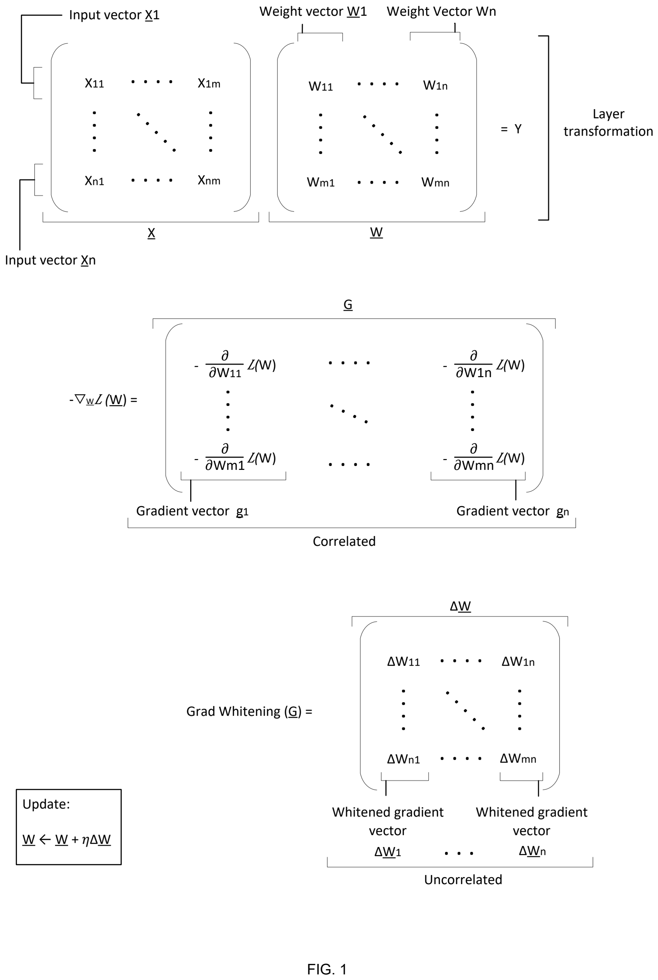

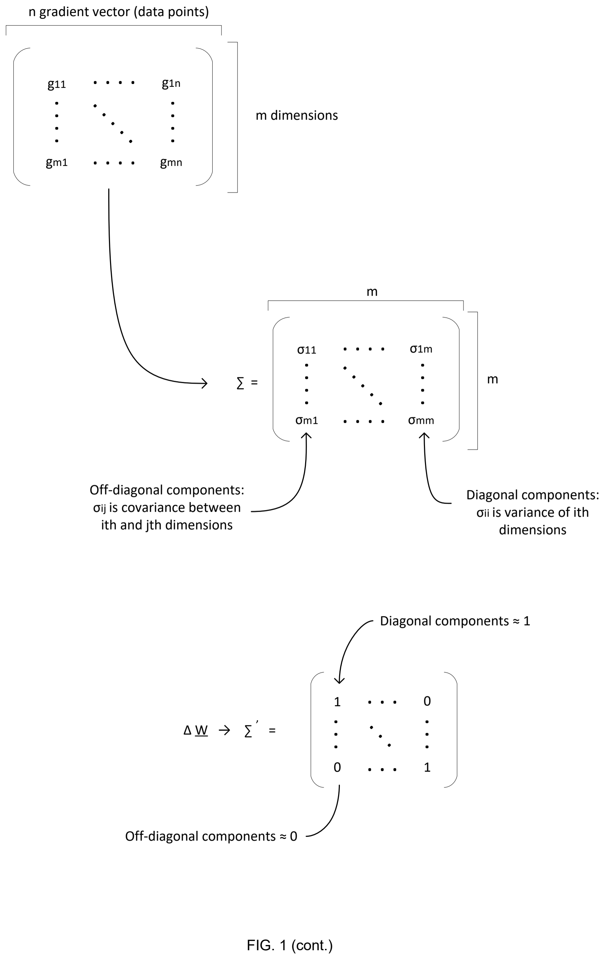

FIG.1 shows a schematic overview of certain principles underpinning gradient whitening. An example layer transformation within an ML model is shown, which involves a matrix multiplication between an input matrix X and a weight matrix W. In this example, the layer transformation is expressed as a matrix multiplication Y = XW where X is an input matrix of dimensions $n \times m$ and each row of **X** is an input vector of dimension m, and where W is a weight matrix of dimensions m $\times$ n and each column of W is a weight vector of dimension m. Hence, m is the dimension of a vector space of the input and weight vectors. Equally, this could be expressed as WX, in which case each column of **X** is an input vector and each row of **W** is a weight vector. The choice is immaterial. Here, Y is an output matrix. Additional operations such as non-linear processing, e.g., SoftMax, ReLu are not depicted but are applied to the output matrix **Y** in certain models.

During training, weights of the weight matrix **W** are optimized based on a training loss function $\mathcal{L}$ (**W**), e.g. defined within respect to a training set. A gradient matrix is computed as G = $-\nabla_w \mathcal{L}$ (**W**), where component $i, j$ of the gradient matrix is $\frac{\partial}{\partial w_{ij}} \mathcal{L}(\mathbf{W})$ and $w_{ij}$ is weight $i, j$ of the weight matrix **W**. Gradient whitening is applied to the gradient matrix **G,** resulting in a whitened gradient matrix $\Delta$**W**. With the convention adopted in FIG.1, each column of the whitened gradient matrix $\Delta$**W** is a whitened gradient vector. The delta notation is used as the weight matrix **W** is updated based on the whitened gradients as **W ← W + $\Delta$W.**

FIG. 1 also summarizes properties **of W** and $\Delta$**W** in terms of their respective covariance matrices $\Sigma$ and $\Sigma$'. Each covariance matrix has dimension m $\times$ m where m is the vector space dimension. Diagonal elements of $\Sigma$ (covariance of **W**) give the variance of individual vector dimensions within **W,** whilst off-diagonal elements give the covariance between different vector dimensions within **W.** $\Sigma$' captured the same information for $\Delta$**W.** As this has been subject to whitening, the diagonal components of $\Sigma$' are each substantially equal to one and the off-diagonal components are each substantially equal to zero, meaning that within the whitened gradient matrix $\Delta$**W,** each dimension has substantially unit variance, and all dimensions are substantially decorrelated from each other.

Although FIG. 1 depicts gradient whitening applied to the "raw" gradient matrix G, in other implementations whitening is applied to a normalized version of **G.**

Training Large Language Models (LLMs) is challenging due to high memory and computational demands. The widely-used Adam optimizer is particularly memory intensive because it relies on exponential moving averages (EMAs) of moments, doubling the memory footprint. To address these limitations, two questions are addressed: i) Can all EMA components in adaptive optimizers be eliminated while maintaining or enhancing Adam's performance? ii), can the earning dynamics of LLMs be harnessed to achieve fundamental advancements in optimizer design, specifically overcoming the constraints of EMA-based methods?

An example implementation referred to herein as No-EMA provides a minimalist adaptive optimizer that completely removes the need for EMAs. No-EMA incorporates two novel operators-GradNorm and GradWhitening - both rely on only current gradient information. The GradNorm operator stabilizes gradient noise using merely statistics within the current step, while the GradWhitening operator counteracts local geometries, ensuring uniform traversal rate across all eigen-directions of the loss landscape. Notably, both operators are derived from the gradient flows and Hessians inherent in transformer-based models. Empirical evaluations on LLM pretraining tasks demonstrate that No-EMA not only eliminates the memory overhead associated with Adam's state variables but also achieves over two-times speed-ups in terms of tokens processed for models with 350M and 1.3B parameters.

The Adam optimizer has emerged as the golden standard for training LLMs, owing to its adaptive learning rates and robustness to stochastic gradients. It has been widely adopted in training various architectures, including GPT , LLaMA, DeepSeek, and OPT. Under the hood of Adam, one the most important design principle is the use of exponential moving averages (EMAs) for tracking different moment estimates. This conventioal strategy has been used in many subsequent variants and extensions. EMA enabled the empirical success of Adam, but also introduced significant memory overhead: maintaining these moment estimates triples the memory required for storing model weights, which becomes prohibitive as it scales.

To address these constraints, several approaches have been proposed. Low-rank approximation methods aim to reduce memory usage by representing optimizer states in a lower-dimensional space. However, these methods often require storing compressed states proportional to the model dimension and may underperform in terms of convergence speed and final model quality.

Some embodiments herein remove all optimizer states/EMAs when designing adaptive optimizers, while making their performance comparable or even better than Adam.

Conventional approaches, rooted in optimization techniques developed a decade ago, may not fully leverage the unique dynamics of training modern large models like LLMs. As the optimization landscape evolves, it presents new opportunities for innovation beyond incremental modifications of existing methods like Adam.

Some embodiments herein leverage properties of large model learning dynamics to achieve non-incremental advancements in optimizer design, e.g., specifically addressing the limitations of EMA-focused methods like Adam.

A twofold approach to optimizer design is adopted in some embodiments. Key properties that contribute to Adam's remarkable success are identified, notably its ability to stabilize stochastic noises of gradients and adaptation to the curvature of the loss landscape. The vonventional view is that EMAs are instrumental in realizing these properties, but contrary to conventional wisdom, certain embodiments herein achieve the desired properties without the EMAs. Second, specifically, by analyzing the learning dynamics unique to transformer-based LLMs, new optimization strategies that inherently align with these dynamics are derivec. Surprisingly, analysis reveals that these optimized strategies can achieve the desired noise stabilization and curvature adaptation without the need for EMAs.

One implementation of No-EMA is set out in Algorithm 1, which is a minimalist adaptive optimizer that eliminates the need for exponential moving averages of moments. No-EMA leverages two novel operators-GradNorm and Grad-Whitening-that perform gradient normalization and whitening, respectively, using information solely from the current gradient. The GradNorm operator normalizes the gradient matrix using statistics computed within a single training step, effectively smoothes the mini-batch noise without the need for past gradients. The GradWhitening operator whitens the gradients to cancel out local geometric dependencies, ensuring the optimizer traverses all eigen directions with the same rate. For practical implementation, the No-EMA optimizer is constructed as:

$$\widetilde{\mathbf{G}}^{(t)} \leftarrow \text{GradNorm}(\mathbf{G}^{(t)})$$

$$\Delta\mathbf{W}^{(t)} \leftarrow \text{GradWhitening}(\widetilde{\mathbf{G}}^{(t)})$$

Where **G** is the gradient of loss at the current training step. Remarkably, from the LLM dynamics perspective, GradNorm and GradWhitening can both be derived from leveraging structures of gradient flows and Hessians that emerges during transformers learning, as shown below.

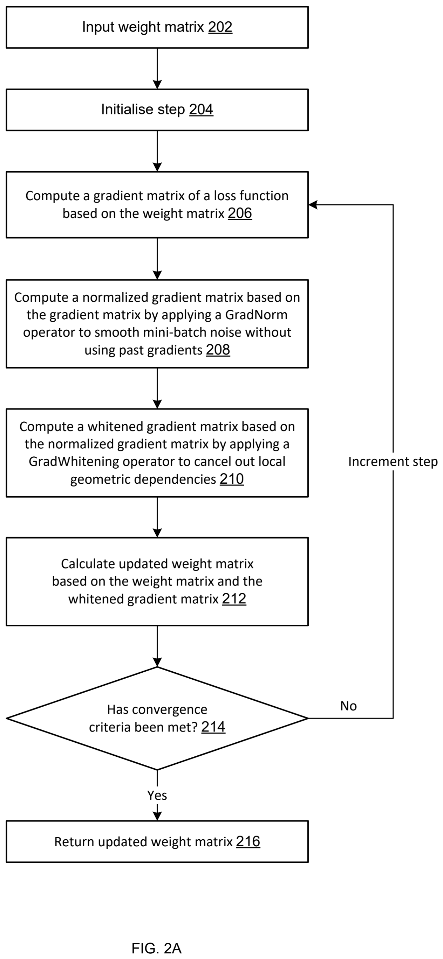

FIG. 2A shows a flow diagram illustration of an example algorithm 1 as implemented by a "No-EMA" optimizer. Further details of Algorithm 1 are provided below in pseudocode. At step 202, the No-EMA optimizer receives as input a weight matrix $\mathbf{W} \in \mathbb{R}^{m \times n}$ and initialises a first iteration t = 0 (step 204). The algorithm is iterative in nature, meaning the description of t = 0 applies equally to t > 0 with outputs from step t - 1 becoming inputs to step t. For the current step t, the optmizer computes, based on a loss function $\mathcal{L}^{(t)}$ and the weight matrix **W,** a gradient matrix $\mathbf{G}^{(t)} \in \mathbb{R}^{m \times n}$ at step 206, each component of which is a gradient of the loss function with respect to a corresponding weight component of the weight matrix. At step 208, the optimizer applies a GradNorm operator to the gradient matrix **G**(t) to smooth mini-batch noise without using past gradients, which returns a normalized gradient matrix G̃(t). At step 210, the optimizer applies a GradWhitening operator to the normalized gradient matrix G̃(t) to cancel out local gemetric dependencies, which returns a whitened gradient matrix Δ**W**(t). At step 212, the optimizer calculates an updated weight matrix **W**(t) based on the whitened gradient matrix of the preceding step Δ**W**(t-1) and the weight matrix of the preceding step **W**(t-1). At step 214, the optimizer determines whether a convergence criterion (or criteria) have been met, such as reaching a maximum number of iterations. If not, the method returns to step 206 and repeats with t = t + 1. If so, the method terminates, at which point the updated weight matrix W(t) is returned (216) as a final output.

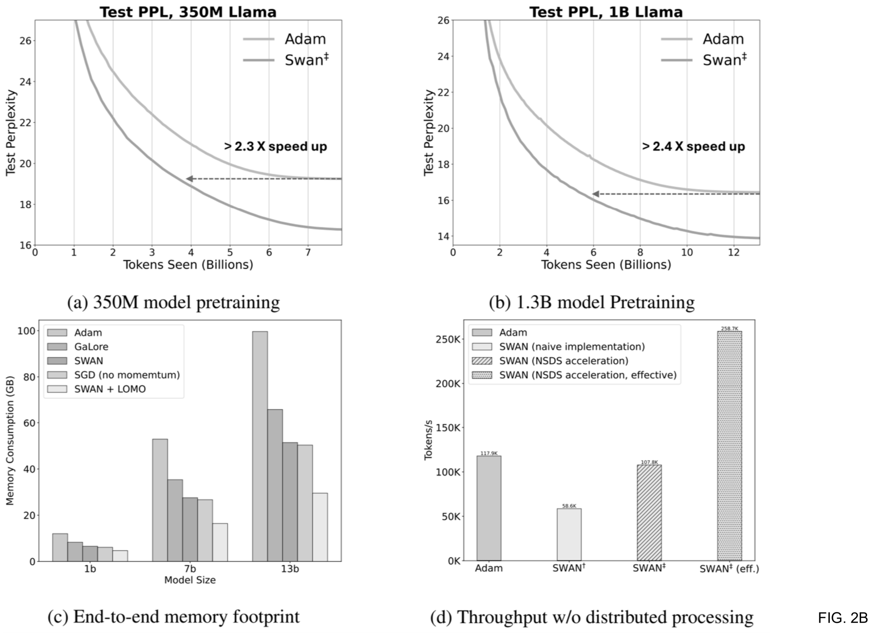

FIG. 2B shows a set of empirical results for the No-EMA method on LLM pre-training tasks. As shown in (a), a comparison of memory usage of optimizer states, estimated on 7B model with BF16 format, no-EMA completely removed the need to store any additional optimizer states. As can be seen in (b) and (c), on both 350M and 1.3B LLama architectures, No-EMA achieves > 2X speed-up vs Adam in terms of the number of steps (hence the number of tokens). For the Adam baseline, the same hyperparameter for Adam and learning rate tuning procedure as in Zhao et al. (2024). For No-EMA , default learning rates are used without extensive tuning.

**Algorithm 1** No-EMA Optimizer:

**Input:** weight matrix $\mathbf{W} \in \mathbb{R}^{m \times n}$ with $m \leq n$. Step size $\eta$. Number of Newton-Schulz iteration $k$.

Initialize step $t \leftarrow 0$

repeat

$\quad \mathbf{G}^{(t)} \in \mathbb{R}^{m \times n} \leftarrow \nabla_{\mathbf{W}^{(t)}} \mathcal{L}^{(t)}(\mathbf{W}^{(t)})$

$\quad \widetilde{\mathbf{G}}^{(t)} \leftarrow \text{GradNorm}(\mathbf{G}^{(t)})$

$\quad \Delta \mathbf{W}^{(t)} \leftarrow \text{GradWhitening}(\widetilde{\mathbf{G}}^{(t)}, K)$

$\quad \text{(optional) } \Delta \mathbf{W}^{(t)} \leftarrow \frac{\|\widetilde{\mathbf{G}}^{(t)}\| \Delta \mathbf{W}^{(t)}}{\|\Delta \mathbf{W}^{(t)}\|}$

$\quad \mathbf{W}^{(t)} \leftarrow \mathbf{W}^{(t-1)} - \eta \Delta \mathbf{W}^{(t-1)}$

$\quad t \leftarrow t + 1$

**until** convergence criteria met

**return** $\mathbf{W}^{(t)}$

In the above example, the updated weight matrix W$^{(t)}$ is scaled by a factor $\|\tilde{G}^{(t)}\|$. In an alternative implementation, this factor is replaced by a constant dependence on the size of the weight matrix W such as $\sqrt{mn}$ .

For the No-EMA method on LLM pre-training tasks, a comparison of memory usage of optimizer states, estimated on 7B model with BF16 format is considered. No-EMA completely removed the need to store any additional optimizer states. On both 350M and 1.3B LLama architectures, No-EMA achieves > 2X speed-up vs Adam in terms of the number of steps (hence the number of tokens). For the Adam baseline, the same hyperparameter for Adam and learning rate tuning procedure as in Zhao et al. (2024). For No-EMA , default learning rates were used without extensive tuning.

No-EMA is an optimizer that forgoes exponential moving averages by replacing their roles with two novel, simple operators-GradNorm and GradWhitening. This design eliminates all memory overhead associated with maintaining moment estimates.

Through extensive experiments on LLM pretraining tasks, No-EMA has been demonstrated not only to reduce memory overhead but also outperform the Adam optimizer and baselines. Notably, No-EMA achieves speed-ups of over two times in terms of the number of tokens used for both 350M and 1.3B models.

No-EMA and its connections to LLM Dynamics and forward operations in deep learning architectures are discussed. Qualities that enables the success of Adam into two critical parts include stabilizing mini-batch gradient noises, and canceling local geometries.

From the LLM dynamics perspective, GradNorm and GradWhitening can both be derived from leveraging structures of gradient flows and Hessians that emerges during transformers learning, as inductive biases (Theorem 1 and Theorem 3). From the architecture point of view , GradNorm and GradWhitening can be seen as applying the forward operations Layer Normalization and decorrelated Batch Norm onto the backward gradient matrices, respectively.

It is demonstrated that both GradNorm and GradWhitening are derived from leveraging properties of gradient flows and Hessians that emerges during transformers learning (Theorem 1 and Theorem 3).

It is shown theoretically and empirically that GradNorm effectively reduces mini-batch gradient noise, enhancing the stability of the optimization process (Theorem 1); and GradWhitening leads to convergence rates that do not explicitly depend on the condition number of the local curvature (Theorem 2), offering non-incremental advantages over SGD and Adam (Proposition 2)

An insight herein is that essential functions of EMAs in Adam can be effectively replicated using operations that rely solely on current gradient information. By connecting optimization techniques with architectural concepts like normalization, the disclosed methods open avenues for developing more efficient and scalable optimizers tailored for large-scale models.

By way of context, the Adam optimizer has been widely adopted for training deep neural networks, especially in scenarios involving large-scale models and noisy gradient estimates. Adam combines the advantages of two earlier methods: AdaGrad, which adapts learning rates based on the historical gradient magnitude, and RMSProp, which mitigates the aggressive decrease in learning rates by using a decaying average of squared gradients.

Adam can be broken down into the following steps:

$$\mathbf{G}^{(t)} = \nabla_{\mathbf{W}} \mathcal{L}_{\mathbf{W}}(x^{(t)}) \qquad \text{(stochastic gradient)}$$

$$\mathbf{m}^{(t)} = \beta_1 \mathbf{m}^{(t-1)} + (1-\beta_1)\mathbf{G}^{(t)}, \quad \widehat{\mathbf{m}}^{(t)} = \frac{\mathbf{m}^{(t)}}{1=\beta_1^T} \qquad \text{(EMA first moment)}$$

$$\mathbf{v}^{(t)} = \beta_2 \mathbf{v}^{(t-1)} + (1-\beta_2)\mathbf{G}^{(t)^2}, \quad \widehat{\mathbf{v}}^{(t)} = \frac{\mathbf{v}^{(t)}}{1=\beta_2^T} \qquad \text{(EMA second moment)}$$

$$\mathbf{W}^{(t)} = \mathbf{W}^{(t-1)} - \eta\left(\frac{\widehat{\mathbf{m}}^{(t)}}{\sqrt{\widehat{\mathbf{v}}^{(t)}}+}\epsilon \qquad \text{(weight update)}\right.$$

where $G^{(t)}$ is the stochastic gradient of a loss $\mathcal{L}_{\mathbf{W}}: X \rightarrow \mathbb{R}$ parameterized by weights $\mathbf{W} \in \mathbb{R}^{m \times n}$; $x^{(t)}$ is a mini-batch of inputs; $m^{(t)}$ and $v^{(t)}$ are exponential moving averages (EMAs) of the first and second moments of the gradients; $\eta$ is a global step size. It is important to note that these steps are all performed element-wise which is in contrast with certain No-EMA embodiments, which operates on a gradient matrix from, for example, a single linear layer.

Two key properties of Adam that contributes to its empirical success are noise smoothing and local geometry whitening.

**Noise Smoothing:** The first moment estimate $m^{(t)}$ performs an exponential moving average over past gradients, effectively smoothing stochastic gradient estimates. This smoothing stabilizes the variance caused by noisy stochastic gradients across time. From a signal processing perspective, the EMA acts both as a low-pass filter in the frequency domain (reducing high-frequency spikes) and smoothing filter in the time domain (stabilizes the amplitude of the random noise), making the gradient updates smoother and more stable over time.

**Local Geometry Whitening:** The second moment estimate $v^{(t)}$ maintains an EMA of the squared gradients, which approximates the diagonal of the Fisher information matrix; which helps to counteract local curvatures of the problem. Specifically, Adam approximates the Fisher information matrix as $\mathbf{F} = \mathbb{E}[\mathbf{g}\mathbf{g}^T] \approx \hat{\mathbf{F}} = diag[\mathbb{E}[\mathbf{g}^2]]$, where g = vec(G) is the (vectorized) gradient of one data sample. Instead of directly preconditioning the gradient with vec(ΔW) = $\hat{F}^{-1}$vec(m), Adam uses a whitening-like pre-conditioning update-rule $vec(\Delta\mathbf{W}) = \hat{\mathbf{F}}^{-\frac{1}{2}}vec(\mathbf{m})$.

Due to the empirical success of Adam, and the widely respected importance of dealing with minibatch noises as well as the local geometries, it is beneficial to preserve those properties when designing new algorithms. In practice, both of these properties in Adam are enabled and realized by first and second moment EMAs. However, contrary to prevailing wisdom, tracking EMAs is not reuired to achieve those properties, especially in the context of LLM training.

The second moment EMA of Adam counteracts local curvature using diagonal approximations. The EMA in the second moment term of Adam comes from the expectation operator in the definition of Fisher information $\mathbf{F} = \mathbb{E}[\mathbf{g}\mathbf{g}^T]$. $\hat{\mathbf{F}}^{-\frac{1}{2}}$ is used over $\hat{F}^{-1}$. $\hat{\mathbf{F}}^{-\frac{1}{2}}$ has been shown to be a better approximation to the geodesic flow of local information geometry, compared with the default natural gradient update. Although recent studies suggest that one might remove the roots in Adam, the exponent $-\frac{1}{2}$ is useful in theoretical analysis. Considering the dynamics of Newton's method, then under certain structural constraints it indeed recovers the the $\hat{\mathbf{F}}^{-\frac{1}{2}}$ used in Adam.

As mentioned above, to achieve smoothing and whitening properties, Adam introduces significant memory overhead storing the gradient moments' EMA.

Embodiments provide an alternative optimizer (Algorithm 1) using two simple operators GradNorm and GradWhitening, that, when applied in tandem, achieve the same desired properties without resorting to storing historical gradient moments:

$$\begin{cases} \widetilde{\mathbf{G}}^{(t)} \leftarrow \mathrm{GradNorm}(\mathbf{G}^{(t)}) \\ \Delta\mathbf{W}^{(t)} \leftarrow \mathrm{GradWhitening}(\widetilde{\mathbf{G}}^{(t)}) \end{cases} \qquad \text{(No-EMA)}$$

As noted previously, here G is assumed to be a gradient matrix for some parameter block in a model (e.g. a linear layer); this insight allows the optimizer to take advantage of the model;s matrix structure to achieve the desired smoothing and whitening.

Note that while No-EMA is motivated by Adam's properties, it is not an approximation to Adam. Indeed, No-EMA has been demonstrated to outperform Adam in some scenarios (in particular, LLM training) while significantly reducing memory requirements.

GradNorm: Reducing Gradient Noise

Consider the gradient matrix G with rows and columns corresponding to input and output dimensions, respectively, of some block of model parameters. Let $1 \leq i \leq I$ represent the input indices and $1 \leq o \leq O$ represent the output indices.

Instead of performing EMA to stabilize and normalize the noisy gradients, a standardization transformation across the output dimensions is applied at each time step t, defined as:

$$\mathrm{GradNorm}(\mathbf{G}) := \frac{\mathbf{G} - \overline{g}\mathbf{1}_O^\top}{\mathbf{s}\mathbf{1}_O^\top} \qquad (1)$$

where:

$$\overline{g} = \frac{1}{O}\sum_{o=1}^{O} \mathbf{G}\text{:}, o \text{ is the mean across output dimensions at time t.}$$

$$\mathbf{s} = \sqrt{\frac{1}{O}\sum_{o=1}^{O} \mathbf{G}\text{:}, o - \overline{g})^2} \quad \text{is the standard deviation across dimensions at time t.}$$

$\overline{g}$ and s are $I$-dimensional column vector.

$1_O$ is a O-dimensional column vector of ones.

The subtraction and division are defined as elementwise operations.

As with GradWhitening, GradNorm is an example of operators typically applied in the forward pass applied to the backward pass: GradNorm is LayerNorm being applied to the backward rather than forward activations.

Remarkably, by studying the gradient dynamics of a simplified transformer architecture, it is shown that GradNorm is an optimal gradient noise stabilizing strategy.

GradNorm standardizes G by centering and scaling across one axis, which is by default across the output dimension.

Occasionally, $\overline{g}$ to be close to the zero vector. Therefore, some embodiments simplify further:

$$\mathrm{GradNorm}(\mathbf{G}) := \frac{\mathbf{G}}{\mathbf{s}\mathbf{1}_O^\top}$$

Ablation studies have shown that GradNorm is not simply increasing the effective learning rates

Despite its simplicity, it is demonstated below that GradNorm can be derived as a result of the gradient dynamics of transformers. It effectively removes the time-variant components of gradient covariances (Theorem 1), hence stabilizing the covariance of stochastic gradients over time.

GradNorm does not change the local minimas of the optimization problem, meaning {W|G(W) = 0} = {**W**| GradNorm(**G**(**W**)) = **0**}.

To achieve the property of **local geometry whitening** (Section 2.1), the GradWhitening operator is used.

GradWhitening is described below from algorithmic perspective, and it is also discussed how it can be derived from LLM dynamics, and its connections to Adam in Section 3 from a information geometry whitening view.

Given the gradient G, the GradWhitening operator simply orthogonalizes $G_O$:

$$\text{GradWhitening}(\mathbf{G}) = \mathbf{G}_O$$

where $G_O$ is the closest orthogonal matrix to G in the sense of Frobenius norm. An equivalent definition is given by:

$$\text{GradWhitening}(\mathbf{G}) = \mathbf{U}\mathbf{V}^T \qquad (2)$$

where U and **V** are both orthogonal matrices defined via a signular value decomposition (SVD) of $\mathbf{G} = \mathbf{U}\mathbf{S}\mathbf{V}^T$. $\mathbf{U}\mathbf{V}^T$ can hence be viewed as simply deleting the singular values of $\mathbf{G} = \mathbf{U}\mathbf{S}\mathbf{V}^T$.

The GradWhitening operator can be conceptualized as stretching/squeezing gradient data along all eigen directions, such that the covariance matrix is identity matrix. In fact, under certain assumptions, GradWhitening can be derived as the optimal local geometry adaptation strategy, under certain structural constraints that emerges at theoretical equilibrium of LLM learning.

GradWhitening is feasible despite being defined via expensive SVDs. In practice, SVD is impractical for large LLMs. However, in the present contents, it is not necessary to obtain the individual matrices of U and **V**, but only their final matrix product. Therefore, one of various GPU-friendly fast approximations is used in some embodiments. The naive Netwon-Schulz (N-S) iteration is used in one embodiments, as it was used as the default solver of whitening in many applications (but other schemes can be used):

$$\mathbf{Y}_{k+1} = \frac{1}{2}\mathbf{Y}_k(3\mathbf{I} - \mathbf{Z}_k\mathbf{Y}_k), \;\; \mathbf{Z}_{k+1} = \frac{1}{2}(3\mathbf{I} - \mathbf{Z}_k\mathbf{Y}_k)\mathbf{Z}_k \qquad (3)$$

where $Y_0 = GG^T$, $Y_0 = I$. At convergence, GradWhitening(G) = ZG. In practice, the Newton-Schulz is only run for around 5-10 iterations, which corresponds to 20-40 matrix multiplications. However, this should have minimum computational overhead (< 10%), similar to the overhead of low rank methods such as Galore. This is because these matrix multiplications are highly parallelizable with fixed matrix size; in practice, for the task of training LLMs the batch size is the more dominant factor. For example QWen 14B has 4M batch size vs $d_{\text{model}} = 5120$, DeepSeek 67B has 6M batch size vs $d_{\text{model}} = 8192$, LLama 3 405B has 4-16M batch size vs $d_{\text{model}} = 16384$.

Another embodiment modifies a Newton-Schulz method by introducing diagonal substitution to reduce computational overhead associated with whitening matrix operations. This approach decreases the cost of matrix multiplication steps by focusing on diagonal components, enabling feasible large-scale implementations while maintaining stable convergence. The iteration is expressed as:

$$\mathbf{Y}_{k+1} = \frac{1}{2}\,\mathbf{Y}_k\,\text{Diag}(3\mathbf{I} - \mathbf{Z}_k\,\text{Diag}(\mathbf{Y}_k)), \quad \mathbf{Z}_{k+1} = \frac{1}{2}(3\mathbf{I} - \text{Diag}(\mathbf{Z}_k)\,\mathbf{Y}_k)\,\text{Diag}(\mathbf{Z}_k).$$

This approach achieves a further improvement in computational efficiency of O(mn). By reducing reliance on more expensive matrix multiplications, it preserves computational efficiency for large-scale tasks and can converge within a small number of iterations.

From the "pseudo dataset" viewpoint used in GradNorm, treating each column of G as i.i.d. vector-valued data samples G = {$\mathbf{g}_1$, ..., $\mathbf{g}_i$, ..., $\mathbf{g}_n$}, GradWhitening can be seen as effectively stretches/squeezes this data matrix along the eigenvectors and whitens its covariance to be identity. To see this, the sample gradient covariance from this viewpoint can be written as $GG^T$ T. Therefore the sample covariance of GradWhitening(G) is simply $\mathbf{U}\mathbf{V}^T(\mathbf{U}\mathbf{V}^T)^T = \mathbf{I}$, hence the name whitening. This essentially forces the gradients to traverse all eigen directions at the same rate, hence more robust to local geometries of the optimization problem. As a by-product, in practice, this enables the present optimizer to be warm-up free: it can use large learning rates without the need for learning rate warm-up.

Whitening via removing singular values has been used in different contexts. In the deep learning architecture literature, this is known as *decorrelated batch normalization* or *feature whitening,* where the whitening operation has been applied on a mini-batch of features/DNN itermediate activations as an improved alternative to batch normalization. This technique has demonstrated enormous success in regards to both training efficiency and generalization capability. On the contrary, Equation (2) can be seen as applying whitening across the output dimensions of gradients. A key insight herein is that the similar operation can be directly applied to the gradients as well: this in fact will introduce promising theoretical benefits on the resulting gradient flow. Those results and interpretations are analyzed below.

Treating each column (or rows) of a gradient matrix G as a separate data sample, the GradWhitening operator can be seen as stretching/squeezing the gradient data along all eigen directions, such that the covariance matrix is identity matrix. As shown in Theorem 2, this operation makes the convergence rate robust against local curvature of loss landscape. In the No-EMA optimizer, GradWhitening is applied on top of GradNorm compositionally. Note that the same approach can be applied row-wise as well.

From a pre-processing operation perspective, GradWhitening = orthogonalizes G = minimizing the condition number of G = making the column-wise sample covariance $GG^T$ identity (Theorem 3).

From a learning dynamics, GradNorm approximates performing Newton's update, under certain structural constraints emerged in LLM training operation perspective.

From an architectural correspondence perspective, GradWhitening can be viewed as applying decorrelated Batch Norm on output dimensions of gradient matrix G.

GradNorm can be derived as an optimal strategy to remove the time-variant components of LLM gradient covariances, given a simplified theoretical model of transformer architecture (Theorem 1).

GradWhitening can be derived via applying Newton's update on a simplified theoretical model of transformer Theorem 3. The Hessian structure that are emerged at the theoretical equilibrium of transformers helps to greatly simplify Newton's update into GradWhitening operations.

GradWhitening leads to convergence rates that are robust to the condition number of the local curvature (Theorem 2), offering non-incremental theoretical advantages over SGD and Adam (Proposition 2)

GradNorm stabilizes covariance of LLM stochastic gradients. GradNorm is Hessian-free second order method that leverages structures of LLMs. It makes the LLM update robust to the ill-conditioned problem.

Taking a transformer LLM architecture as an example, it is demonstrated that GradNorm effectively removes the time-variant components of gradient noises. A transformer block (STB) architecture is considered, which contains the major building blocks of transformers and relies on relatively less restrictive assumptions and simplifications, making them suitable for theoretical analysis for transformer dynamics.

**Definition** 1 (Simplified Transformer Block (STB)). Given the input activation $\boldsymbol{x} \in \mathbb{R}^{M_C \times 1}$, query token index $q$, context embedding matrix $\boldsymbol{U}_C \in \mathbb{R}^{d \times M_C}$, and the query embedding $\boldsymbol{u}_q \in \mathbb{R}^{d \times 1}$, the simplified transformer block computes the output $\boldsymbol{h} \in \mathbb{R}^{n \times 1}$ as follows:$h = \phi\left(W^T(U_C(\exp(z_q) \odot x) + u_q)\right)$

where the attention logits $\mathbf{z}_q \in \mathbb{R}^{M_C \times 1}$ are given by

$$\mathbf{z}_{ql} = \mathbf{u}_q^\top \mathbf{W}_Q^\top \mathbf{W}_K \mathbf{u}_l$$

with $\boldsymbol{W}_Q, \boldsymbol{W}_K \in \mathbb{R}^{d \times d}$ being weight matrices for the queries and keys, respectively, $\boldsymbol{W} \in \mathbb{R}^{d \times n}$ is the weight matrix for the feedforward network, and $\phi$ is a nonlinearity function such as ReLU.

Given a STB, the following standard mini-batch learning dynamics are considered. Defining a conditional expectation $\mathbb{E}_{q=m}[\cdot] := \mathbb{E}[\cdot \mid q = m]$, the dynamics of the weight matrix **W** and the attention logits $z_q$ are considered. A model is trained with a batch of inputs that always end up with query $q[i] = m$. The weight update for **W** and $z_q$ are given by the following noisy updates:

$$\dot{\mathbf{W}}^{(t)} = \mathbb{E}_{q=m}\left[\boldsymbol{f}^{(t)}\mathbf{G}_h \odot \boldsymbol{h}'^{(t)}\right)^{\mathrm{T}}\right] + \varepsilon^{(t)}, \ \dot{\mathbf{z}}_{\mathbf{m}}^{(t)} = \mathbb{E}_{q=m}\left[\left(\frac{\partial}{\partial \mathbf{z}_{\mathbf{m}}^{(t)}}\right)^{\mathrm{T}} \mathbf{U}_C^{\mathrm{T}}\mathbf{g}_f^{(t)}\right] + \varsigma^{(t)} \quad (4)$$

where $\boldsymbol{f}^{(t)} = \left(\mathbf{U}_C\left(\exp\left(\mathbf{z}_q^{(t)}\right) \odot x + \mathbf{u}_q\right)\right)$, $(\boldsymbol{h}^{(t)})' = \phi'\left(\left(\mathbf{W}^{(t)}\right)^{\mathrm{T}}f^{(t)}\right)$ is the derivative of the current activation, $\mathbf{G}_h^{(t)} = \nabla_{h^{(t)}}\mathcal{L}$ is the gradient of the loss function $\mathcal{L}$ with respect to the hidden activation $h^{(t)}$, and $\boldsymbol{g}_{f^{(t)}}^{(t)} = \sum_k \boldsymbol{g}_{\boldsymbol{h}_k^{(t)}}^{(t)} \left(\boldsymbol{h}_k^{(t)}\right)' \boldsymbol{w}_k^{(t)}$ is the sum of the gradients with respect to the attention logits. Here, $w_k^{(t)}$ is the k-th column of $w^{(t)}$, $\boldsymbol{g}_{\boldsymbol{h}_k^{(t)}}^{(t)}$ [$i$] be the backpropagated gradient sent to node $k$ at sample $i$. Finally, $\varepsilon$ and $\varsigma$ are random noises that are induced by the minibatch sampling.

Given STB under the dynamics of Equation (4), the distribution of noises $\varepsilon^{(t)}$ and $\varsigma^{(t)}$ generally vary across time, since both the integrand within expectation, $[f^{(t)}G_h \odot h'^{(t)})^{\mathsf{T}}$ and $\left(\frac{\partial}{\partial \mathbf{z}_{\mathbf{m}}^{(t)}}\right)^{\mathsf{T}} \mathbf{U}_C^{\mathsf{T}} \mathbf{g}_f^{(t)}$ vary across time. However, the following result on GradNorm suggests that this time variability of $\varepsilon^{(t)}$ and $\varsigma^{(t)}$ are completely removed by GradNorm:

Theorem 1 (GradNorm stabilizes gradient noises across time). Consider the STB (Definition 1) under the dynamics of Equation (4). Then for the MLP project-up matrix W the standardized gradients $\widetilde{\mathbf{W}}^{(t)} = \mathrm{GradNorm}(\dot{\mathbf{W}}^{(t)})$ defined by equation equation 1 satisfy:

$$\mathrm{Cov}\left[\dot{\mathbf{W}}^{(t)}[i,:]^{(t_1)}\right] \triangleq \mathrm{Cov}\left[\dot{\mathbf{W}}^{(t)}[i,:]^{(t_2)}\right]$$

*for all $t_1$, $t_2$ and i.*

In other words, the covariance structure of $\widetilde{\mathbf{W}}$ is identical across all time steps t, achieving distributional stability across time. Similarly, the same statement applies for the attention score matrix gradient $\dot{\mathbf{z}}_{\mathbf{m}}^{(t)}$.

Theorem 1 suggests that GradNorm makes use of the inductive bias induced by transformer architectures and directly removes the time-variant components in gradient covariance structures caused by mini-batch sampling.

Hereinbelow, main results regarding the convergence rate of the GradWhitening method are presented, with an analysis of its implications, and a comparison with the lower bounds of GD and Adam.

A quadratic problem is considered initially:

$$\mathcal{L}(\mathbf{W}) = \frac{1}{2}\mathrm{Tr}(\mathbf{W}^{\mathsf{T}}\mathbf{H}\mathbf{W}) - \mathrm{Tr}(\mathbf{C}^{\mathsf{T}}\mathbf{W}), \qquad (5)$$

where $\mathbf{W} \in \mathbb{R}^{m \times n}$ is the parameter matrix, $\mathbf{H} \in \mathbb{R}^{m \times m}$ is a positive definite matrix, and $\mathbf{C} \in \mathbb{R}^{m \times m}$ is a constant matrix.

For simplicity and without loss of generality, it is assumed C = 0. This is because minimizing $\mathcal{L}(\mathbf{W}) = \frac{1}{2}\mathrm{Tr}(\mathbf{W}^{\mathsf{T}}\mathbf{H}\mathbf{W}) - \mathrm{Tr}(\mathbf{C}^{\mathsf{T}}\mathbf{W})$, is equivalent to minimizing $\mathcal{L}(\mathbf{W}) = \frac{1}{2}\mathrm{Tr}(\mathbf{W} - \mathbf{W}^*)^{\mathsf{T}}\mathbf{H}(\mathbf{W} - \mathbf{W}^*)]$, where W* = H⁻¹C. By defining Z = W - W*, the problem reduces to minimizing $\mathcal{L}(\mathbf{W}) = \frac{1}{2}\mathrm{Tr}(\mathbf{Z}^{\mathsf{T}}\mathbf{H}\mathbf{Z})$.

Most results in this note can be easily extended to any loss function that are either i) strongly convex; or ii) has twice differentiable functions and Lipschitz continuous Hessian, by considering their the second order approximation around W*.

Next, to understand the effect of GradWhitening, the gradient flow dynamics induced by GradWhitening is considered. Consider the GradWhitening-modified gradient descent:

$$\Delta\mathbf{W}^{(t)} = -\eta\mathrm{GradWhitening}(\mathbf{G}^{(t)}) \qquad (6)$$

Its exact convergence rate is given by the result as below.

**Theorem 2 (Contraction factor of** GradWhitening). Consider the quadratic loss function Equation (5). Assume the initialization distribution of W⁰ assigns zero probability to any set of zero Lebesgue measure in $\mathbb{R}^{m \times n}$. The following update rules is used

$$\mathbf{W}_{whitened}^{(t+1)} = \mathbf{W}_{whitened}^{(t)} - \eta\mathrm{GradWhitening}(\mathbf{G}^{(t)})$$

where the learning rate is $\eta$. Then, with probability 1, it follows:

The optimal dynamic learning rate to achieve the fastest convergence is given by

$$\eta^{(t)*} = \frac{\|\mathbf{HW}^{(t)}_{whitened}\|_1}{Tr[\mathbf{H}]} \qquad (7)$$

where $\|\mathbf{HW}^{(t)}_{whitened}\|_1$ denotes the Schatten p-norm with p = 1 (i.e., sum of singular values).

Under $\eta^{(t)*}$, the contraction factor of loss function at t is given by:

$$\frac{\mathcal{L}(\mathbf{W}^{(t+1)}_{whitened}) - \mathcal{L}^*}{\mathcal{L}(\mathbf{W}^{(t)}_{whitened}) - \mathcal{L}^*} = 1 - \frac{\|\mathbf{HW}^{(t)}_{whitened}\|_1^2}{Tr\left[\left(\mathbf{W}^{(t)}_{whitened}\right)^{\mathsf{T}} \mathbf{HW}^{(t)}_{whitened}\right] Tr[\mathbf{H}]} \qquad (8)$$

Furthermore, enforcing $\mathbf{W}^0 \sim V^{m \times n}(\mathbb{R})$, meaning initialized as an element in Steifel manifold. It follows:

$$\frac{\mathcal{L}(\mathbf{W}^{(t+1)}_{whitened}) - \mathcal{L}^*}{\mathcal{L}(\mathbf{W}^0) - \mathcal{L}^*} = 0 \qquad (9)$$

That is, GradWhitening solves the optimization problem (Equation (5)) with 1 step iteration.

Theorem 2 has the following key implications.

Convergence rate is condition number agnositc: Unlike the convergence rates of GD and Adam presented in Zhang et al. (2024), as well as Theorem 4 and Corollary 1 in Appendix, the optimal convergence rate (A) of GradWhitening no longer explicitly depends on the condition number κ of *H.* In fact, consider a lower bound

$$\frac{\|\mathbf{HW}^{(t)}_{whitened}\|_1^2}{Tr\left[\left(\mathbf{W}^{(t)}_{whitened}\right)^{\mathsf{T}} \mathbf{HW}^{(t)}_{whitened}\right] Tr[\mathbf{H}]} \geq \frac{Tr\|H\mathbf{W}^{(t)}_{whitened}\|^2}{Tr\left[\left(\mathbf{W}^{(t)}_{whitened}\right)^{\mathsf{T}} \mathbf{HW}^{(t)}_{whitened}\right] Tr[\mathbf{H}]}$$

since trace of H appear both in the nominator and denominator, the present approach is expected to be more robust to ill-conditioned problems. For example, consider the specific initialization $\mathbf{W}^{(t)}_{whitened} = cI$, it is straightforward to show

that $\frac{\|\mathbf{HW}^{(t)}_{whitened}\|_1^2}{Tr\left[\left(\mathbf{W}^{(t)}_{whitened}\right)^{\mathsf{T}} \mathbf{HW}^{(t)}_{whitened}\right] Tr[\mathbf{H}]} \geq \frac{Tr\|H\mathbf{W}^{(t)}_{whitened}\|^2}{Tr\left[\left(\mathbf{W}^{(t)}_{whitened}\right)^{\mathsf{T}} \mathbf{HW}^{(t)}_{whitened}\right] Tr[\mathbf{H}]}$, ⊥ κ, which is completely disentangled from the condition number. Hence $\frac{\|\mathbf{HW}^{(t)}_{whitened}\|_1^2}{Tr\left[\left(\mathbf{W}^{(t)}_{whitened}\right)^{\mathsf{T}} \mathbf{HW}^{(t)}_{whitened}\right] Tr[\mathbf{H}]}$ would not shrink as $\kappa \to \infty$. See

Proposition 1 for less extreme situations.

Superlinear convergence with Stiefel manifold initialization: Theorem 2 suggests that if $\mathbf{W}^{(t)}_{whitened}$ is initialized in the Stiefel manifold, then GradWhitening reaches superlinear convergence rate (= Newton's method), while being cheaper. In fact, it is straightforward to verify that GradWhitening reaches optimal solution with 1 step update. This implies GradWhitening is theoretically the optimal optimization algorithm if W is initialized in the Stiefel manifold.

Estimation and interpretation of optimal learning rate: Compared to the optimal dynamic learning rate of gradient descent $G = \frac{G^{\mathsf{T}} G}{G^{\mathsf{T}} H G}$, the optimal learning rate $\eta^{(t)*}$ of GradWhitening is much easier to compute. $\frac{Tr[H\mathbf{W}^{(t)}_{whitened}]}{Tr[\mathbf{H}]}$ can

be seen as balancing the average gradient magnitude against the average curvature. A higher trace of gradient ( $\mathbf{HW}^{(t)}_{whitened}$ ) (strong gradients) relative to H (steep curvature) suggests a larger learning rate, promoting faster updates. Conversely, a higher trace of H would imply a smaller learning rate to ensure stable convergence in regions with high curvature.

The convergence speed of GradWhitening update is indeed robust to the condition number of local curvature.

Proposition 1 (Robustness of GradWhitening update convergence rate against the condition number of local Hessian). *Consider the quantity:*

$$Q := \frac{Tr[HW_{whitened}^t]^2}{Tr\left[\left(\mathbf{W}_{whitened}^{(t)}\right)^{\mathrm{T}} \mathbf{H}\mathbf{W}_{whitened}^{(t)}\right] Tr[\mathbf{H}]}$$

Assume: i), $\mathbf{W}_{whitened}^{(t)} \neq \mathbf{W}^*$ ; and ii) the norm of H is bounded. Then, there exist some finite positive constant c, such that

$$Q > c$$

This holds even if $\kappa \to +\infty$, where $\kappa$ is the condition number of H.

Below, comparison between GradWhitening modified gradient descent and Adam is provided. Non-Stiefel initialization for GradWhitening are considered, since with non-Stiefel initialization GradWhitening is optimal according to Theorem 2. Results show that, for poor conditioned problems GradWhitening with a properly chosen single global learning rate always outperforms Adam even with optimally tuned sub-group learning rates, in terms of convergence speed.

Proposition 2 (GradWhitening with single lr vs Adam with tuned group lr). Consider the optimization problem Equation (5). Assume H is block-diagonal, i.e., H = *diag(H$_1$,* H$_2$, ..., H$_L$), where each $\mathbf{H}_l \in \mathbb{R}^{m_l \times m_l}$ is a positive definite matrix for *l* = 1,2, ..., L, and $\sum_{l=1}^{L} m_l = m$. Assuming for GradWhitening one global learning rate for all parameters; and for Adam, the optimally chosen group learning rate $\eta l$ and initial condition $w_0$ for each block H$_l$.

Assume either if i) certain regularity conditions are met (see proof in Appendix), or ii), if H is poorly-conditioned (its condition number is large enough). Then: regardless of its initialization, GradWhitening with a properly chosen learning rate will still have a strictly better convergence speed (i.e., smaller contraction factor) across all blocks l $\in$ [L] than Adam ($\beta_1$ = 0, $\beta_2$ = 1) 1 = 0, $\beta$2 = 1) under optimal group-wise learning rates and initial condition.

Proposition 2 confirmed that No-EMA is *not* an approximation to Adam; and in the scenarios claimed by Proposition 2, the GradWhitening-induced weight update rule has strictly faster convergence compared with Adam, even the Adam global learning rate is tuned per-group wise.

GradWhitening can be naturally derived from the simplified transformer model defined in Definition 1.

Consider the dynamics of the Hessian matrix of STB. It is shown that: i), it turns out that at equilibirum, the Hessian is highly structured; ii), under some conditions, GradWhitening recovers Newton's method-like behaviors under such Hessian structures.

Proposition 3 (Shared structures in the block-diagonal of Hessians at transformer equilibrium). Consider a STB (1), trained by full-batch dynamics (i.e., removing noise in Equation (4)). Consider the following Hessian matrix:

$$\mathbf{H}(\mathbf{W})_{sk,s'k'} = \frac{\partial \mathcal{L}}{\partial w_{sk} \partial w_{s'k'}}$$

where $1 \leq s, s' \leq m, 1 \leq k, k' \leq n$. Then, as $t \to \infty$, the following shared Hessian structure along the diagonal blocks follows:

$$\frac{\mathbf{H}_{sk,s'k}}{\sum_{s,s'} \mathbf{H}_{sk,s'k}} \to \frac{\mathbf{H}_{sk',s'k'}}{\sum_{s,s'} \mathbf{H}_{sk',s'k'}}, \ \forall 1 \leq s, s' \leq d, 1 \leq k, k' \leq n \qquad (10)$$

Proposition 3 shows that, under a simplified setting of transformer, because of the winner-takes-all behavior in the attention model, the Hessian will also converge to an equilibrium solution where the $M_C \times M_C$ blocks over the diagonal direction of Hessian shares the identical structure, after normalization. This result has been verified empirically.

Given by the inductive bias that equality across diagonal blocks of Hessians at transformer learning equilibrium, the next theorem shows that GradWhitening can be derived as a second-order method under this structural assumption

**Theorem 3 (GradWhitening as structural approximation of** Hessian). *Consider the optimization problem given by* $\min_{W \in \mathbb{R}^{m \times n}} f(\mathbf{W})$ *where* $\mathbf{W} \in \mathbb{R}^{m \times n}$*, with m < n.*

*Assume:*

The local Hessian H of f has shared block-diagonal, such that H = *diag(*H̃*,* H̃*, ...,* H̃*, ...,* H̃*)* = I$_{n \times n}$ $\otimes$ H̃, where

$\widetilde{\mathbf{H}} \in \mathbb{R}^{m \times m}$ .

$w^{(t)}$ is initialized as a orthogonal matrix.

Then (under 2nd order approximation) GradWhitening's modified gradient descent (Equation (6)) on f recovers the update of Newton's method, without explicitly estimate second-order quantities.

To summarize, GradWhitening recovers a Newton's method-like behavior under the highly structured Hessian regime (i.e., there exists Ȟ such that H = I$_{n \times n}$ ⊗ Ȟ), which is partially satisfied in transformer equilibrium dynamics (see remark below). Compared to directly applying accelerated second-order methods such as the Gauss-Newton method *(O(Bm²n² + m³n³), B* being batch size) or conjugate gradient method *(O(BTmn)* complexity, *T* = 10 ~ 100, with worst case complexity *O(Bm²n²)),* GradWhitening should be much faster (O(mnmin{m, *n})),* especially under the Newton-Schulz iteration.

Table 1: Comparison with Adam and its memory-efficient low-rank variants on pre-training various sizes of LLaMA models on C4 dataset. Validation perplexity is reported, along with a memory estimate of the total of parameters and optimizer states based on BF16 format.

|  | 60M | 130M | 350M | 1.3 B |
|---|---|---|---|---|
| No-EMA | **32.28 (0.12G)** | **24.13 (0.25G)** | **18.22 (0.68G)** | **15.13 (2.60G)** |
| Adam | 33.02 (0.36G) | 24.14 (0.76G) | 20.11 (2.06G) | 16.44 (7.80G) |
| Galore | 33.09 (0.24G) | 24.67 (0.52G) | 19.74 (1.22G) | 15.89 (4.38G) |
| Low-Rank | 78.18 (0.26G) | 45.51 (0.54G) | 37.41 (1.08G) | 142.53 (3.57G) |
| LoRA | 34.99 (0.36G) | 33.92 (0.80G) | 25.58 (1.76G) | 19.21 (6.17G) |
| ReLoRA | 37.04 (0.36G) | 29.37 (0.80G) | 29.08 (1.76G) | 18.33 (6.17G) |
| No-EMA speed up vs Adam | 1.2X | 1 X | > 2X | > 2X |
| r of low-rank methods | 128 | 256 | 256 | 512 |
| Training Tokens | 1.1B | 2.2B | 6.4B | 13.1B |

An extension of the above methodology uses a Sinkhorn operator that normalizes a matrix X in stable steps. The iteration can be expressed as:

$$\begin{cases} \mathbf{X}_{k+1/2} = \dfrac{\mathbf{X}_k}{\sqrt{1/n \sum_{j=1}^{n}(\mathbf{X}_k[:,j])}} \, , \\[4mm] \mathbf{X}_{k+1} = \dfrac{\mathbf{X}_{k+1/2}}{\sqrt{1/m \sum_{i=1}^{m}(\mathbf{X}_{k+1/2}[i,:])}} \, . \end{cases}$$

Because every row and column is scaled by its sum, this operator efficiently reduces a condition number and requires fewer total iterations for large-scale tasks. This approach can be integrated as a stand-alone iteration, preserving computational feasibility. As the matrix becomes iteratively balanced, it converges to a near-isotropic structure, supporting stable performance in scalable scenarios.

The Sinkhorn-based technique can be viewed as an approximate gradient whitening approach. It systematically rebalances gradient data in each step, promoting a near-isotropic distribution. Note, the Sinkhorn-based technique also subsumes gradient normalization, meaning separate gradient normalization can be omitted.

Method 2

A second example method employs a low-rank optimizer. This method achieves significant memory savings without degrading training performance. Analysis and empirical evidence demonstrate that this approach can maintain, and even exceed, the performance of full-rank Adam optimization. This challenges the prevailing perception that full-rank Adam optimization is the performance cap and that any low-rank approximation will therefore necessarily compromise performance compared with full-rank Adam.

Embodiments of the second method Alice accumulate EMA within a low-dimensional subspace to save memory compared to high-dimensional EMA of Adam optimization.

According to a second aspect herein, a computer-implemented of training a machine learning (ML) model comprises a training step implemented as follows. A gradient of a training loss function is computed with respect to a weight of the ML model. Based on the gradient, a state matrix of rank m is determined. A truncated basis matrix of r selected basis vectors is selected where r<m. The truncated basis matrix comprises a first basis vector, which is one of r principal eigenvectors of the state matrix, and a second randomly-selected basis vector which is orthogonal to the r principal eigenvectors (but which is not necessarily an eigenvector of the state matrix). An updated weight is calculated based on the weight, the gradient, and the truncated basis matrix. In some embodiments, the updated weight is calculated additionally based on an EMA state (or states). A trained ML model is generated based on the updated weight.

Some embodiments include an additional compensation step, which adds an additional compensation term to an update generated from tracking and switching. This compensation term is computed based on the EMA of the norm of a compensation matrix. This compensation matrix is computed based on the current gradient and truncated basis matrix.

An important concept underpinning the method of the second aspect is that of mixing principal directions with one or more "residual" orthonormal directions (directions perpendicular to all r principal directions described by the r principal eigenvectors). A consequence of the above method is that the truncated basis matrix, although truncated to rank r, comprises at least one basis vector which is *not* one of the r principal eigenvectors. This is because the second randomly-selected basis vector is orthogonal to all of the r principal eigenvectors, and, therefore, cannot by definition be one of r principal eigenvectors.

Each eigenvector of the state matrix has an associated eigenvalue. In this context, the *r* principal eigenvectors are the r eigenvectors having the r highest eigenvalues, and can also be characterized as the most important principal components.

The c leading principal eigenvectors are the c eigenvectors with the c highest eigenvalues. A consequence of the method is that at least one eigenvector whose eigenvalue is one of the c highest eigenvalues is selected, whilst at least one principal but non-leading eigenvector is discarded. Principal but non-leading means an eigenvector whose eigenvalue is one of the r highest eigenvalues (it is principal) but is not one of the c highest eigenvalues (it is not leading). In other words, considering the eigenvectors as a sequence ordered by eigenvalue, at least one of the eigenvectors in the subsequence [1, c] is selected, and at least one of the eigenvectors in the subsequence [c + 1, r] is replaced with a residual basis vector.

In some embodiments of the second aspect, the updated weight is calculated using Adam optimization or another optimization method that uses EMA. As noted previously, the use of EMA does come with a memory overhead to store previous gradient updates. However, in the second aspect, this memory overhead is materially reduced because the optimization is applied using the *truncated* basis matrix. More specifically, in some embodiments, the method is applied to *projected* gradients, projected into a lower-dimensional space using the truncated basis matrix. In this case, only the *projected* gradients (or projected gradient information mor generally) from previous training steps need to be retained for the purpose of calculating the EMA, which materially reduces the size of the gradient matrix that needs to be retained. Therefore, although EMA is used, it is possible to implement it with greatly reduced memory overhead. Some embodiments do not retain raw previous gradients, but keep only states computed from previous gradient history. These states are updated at each step, removing the need to retain all previous gradients.

Embodiments of the second method are implemented using Adam with two EMA, and one additional EMA states for the state matrix Q. Typically, tracking a full state matrix of m × m is memory expensive ($\mathcal{O}$ (m$^2$)), but the memory overhead is reduced by using a low-rank approximation to Q, and only tracking the low-rank state (which is memory efficient as it only consumes $\mathcal{O}$ (r$^2$) memory). During eigenvalue decomposition of Q, it is reconstructed back. For the two Adam EMA states, EMA is applied with projected gradients to save memory.

In some such embodiments, the method comprises determining a projected gradient based on the gradient and the truncated basis matrix, and the updated weight is calculated based on the weight and the projected gradient.

In some such embodiments, the updated weight is calculated based on the weight, the truncated basis matrix, one or more (e.g., two) Adam EMA states, and the gradient.

For example, in some such embodiments, the updated weight is calculated based on the weight, the projected gradient and an earlier projected gradient stored from an earlier training step (e.g., based on an EMA computed based on the earlier projected gradient). In some such embodiments, only the EMA as computed based on the earlier projected gradient is retained between steps (the gradient itself is not retained).

In some such embodiments, the EMA state is updated on-the-fly during training with no explicit history gradient being retained.

In some such embodiments, the updated weight is calculated based on the weight, the projected gradient, the earlier projected gradient and the truncated basis matrix. In some such embodiments, having computed the projected gradient, and Adam EMA states, the update is computed in the subspace; to update the actual parameters, the subspace update is projected back to the original space using the truncated basis again.

In some embodiments, all of the c leading principal eigenvectors are retained in the truncated basis matrix, whilst all of the remaining r - c principal eigenvectors are replaced with randomly-sampled basis vectors orthogonal to each of the r principal eigenvectors.

In such embodiments, the method may comprise generating the r principal eigenvectors of the state matrix; and selecting c leading principal eigenvectors from the r principal eigenvectors where c<r, wherein the truncated basis matrix comprises the c leading principal eigenvectors and r-c randomly-selected basis vectors orthogonal to the r principal eigenvectors.

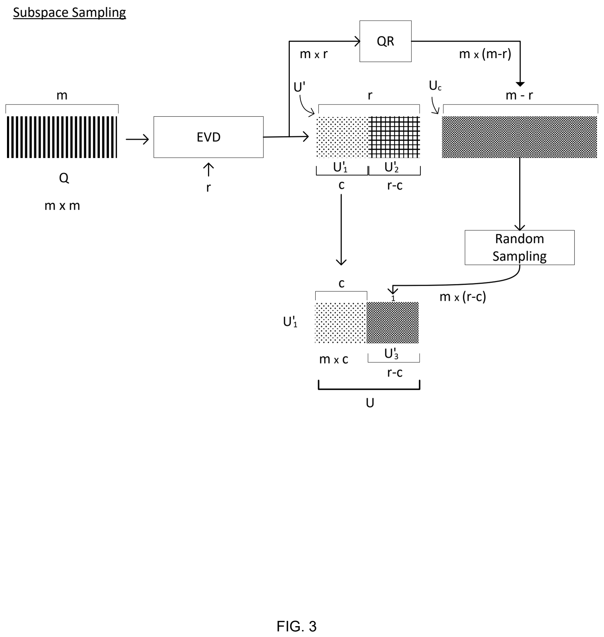

This is referred below as "sub-sampling". FIG. 3 shows a schematic illustration of a sub-sampling operation that is used in some embodiments of the second method, providing an overview to the detailed description of sub-space sampling below.

Truncated eigenvector decomposition (EVD) is applied to a state matrix Q of rank m having dimensions m $\times$ m, denoted by EVD(Q,r). The EVD is truncated to rank r, which is a configurable hyperparameter in some embodiments. The resulting output is a principal component matrix $U'$ containing the r principal eigenvectors (also known as principal components) of Q. The remaining m - r eigenvectors are not computed in this example.

Instead, QR decomposition is applied to $U'$ to compute a complementary matrix $U_c$ containing m - r basis vectors orthogonal to the r principal eigenvectors of $U'$. In some embodiments, r is significantly smaller than m (high level of truncation).

To form a truncated basis matrix $U$ of rank r and dimensions m $\times$ r, the c leading principal component vectors ($U_1$) of $U'$ are retained. However, the remaining r - c principal (but non-leading) eigenvectors ($U_2$) are replaced with r - c basis vectors ($U_3$) randomly sampled from $U_c$ (residual basis vectors).

QR decomposition is a known method that can be used to find the complete basis. Calling QR(U) gives a complete mxm orthonormal matrix. The first r columns will be the same as U since U already contains the orthonormal columns. The remaining mx(m-r) columns of Q are the remaining orthonormal basis of U.

QR decomposition is a computationally efficient way to orthonormalize the given low-rank input U'. QR(U') in combination with EVD(Q,r) gives a complete basis with size mxm. Given U' with size mxr, in some embodiments QR(A) is first used to find B' with size mxr, which is orthonormal and give the first r basis. Then, m-r vectors are randomly initialized, and a Gram-Schmidt procedure is applied to those random vectors to make them orthonormal to B'. Then the resulting matrix is mxm and gives the complete m basis. By way of example, pytorch has implemented an efficient way to get the full basis, by calling B=torch.qr(U, some=False)[0]. The (m-r) basis vectors are not principal components, but a set of vectors that are orthonormal to U' in this example.

In an alternative implementation, full eigen value decomposition (EVD) is used instead of QR. In this case, the residual (m-r) vectors to which random sampling is applied are eigenvectors of Q computed though full EVD. However, there are two advantages associated with QR decomposition: (1) QR is much faster to compute compared to EVD; (2) different design choices have been empirically tested, and QR seems to give the best performance.

More generally, whilst the (m-r) residual basis vectors can be eigenvectors, they are not required to be; they simply need to be orthogonal to the r principal eigenvectors. Therefore, any computationally efficient method for finding orthogonal vectors may be used.

In one implementation, a uniform distribution is defined over the m-r basis vectors, from which they are sampled. In another implementation, a probability of each basis vector (column in this example) is proportional to their eigenvalues. But this requires extended EVD to get the eigenvalues rather than QR, which is computationally heavy. A uniform distribution is a straightforward choice, which gives a good performance.

In some embodiments, c is implemented as a configurable "cut-off" hyperparameter, which can be set to specify how many leading principal components are retained, and how many non-leading principal components are replaced.

Note, the proportion of leading and random basis is not necessarily equal. In some implementations, the proportion is equal, but in other implementations more leading principal eigenvectors are retained than random basis vectors are added, and in yet other implementations fewer leading principal eigenvectors are retained than random basis vectors are added.

In embodiments, the method comprises multiple such training steps as defined above, with a second training step applied to the updated weight as computed in a previous first training step.

Note, in some such embodiments, a truncated basis matrix is not computed in every step. For example, in some implementations, a truncated basis matrix is only computed every K>1 training steps. The truncated basis matrix requires significant computational resources to compute, and it has been found that computing only a subset of training steps does not materially impact training performance, but does significantly increase the computational efficiency of training.

In this respect, it is noted that the references herein to applying a later training step to a weight from an earlier training step does not necessarily imply that that the later training step is directly applied to the updated weight(s) calculated in the earlier training step. It includes, for example, an implementation with one or more intermediate training steps (which are implemented differently in some cases).

In one example, the trained ML model comprises the updated weight. In another example, the trained ML model is otherwise derived from the updated weight, e.g., via one or more additional training steps applied to the updated weight.

In some embodiments, the state matrix is determined based on an earlier gradient computed in an earlier training step.

Some embodiments use tracking to implement a low-rank and memory efficient approximation of EMA.

In some such embodiments, the method comprises computing a modified state matrix based on the projected gradient and an earlier modified state matrix computed in an earlier training step.

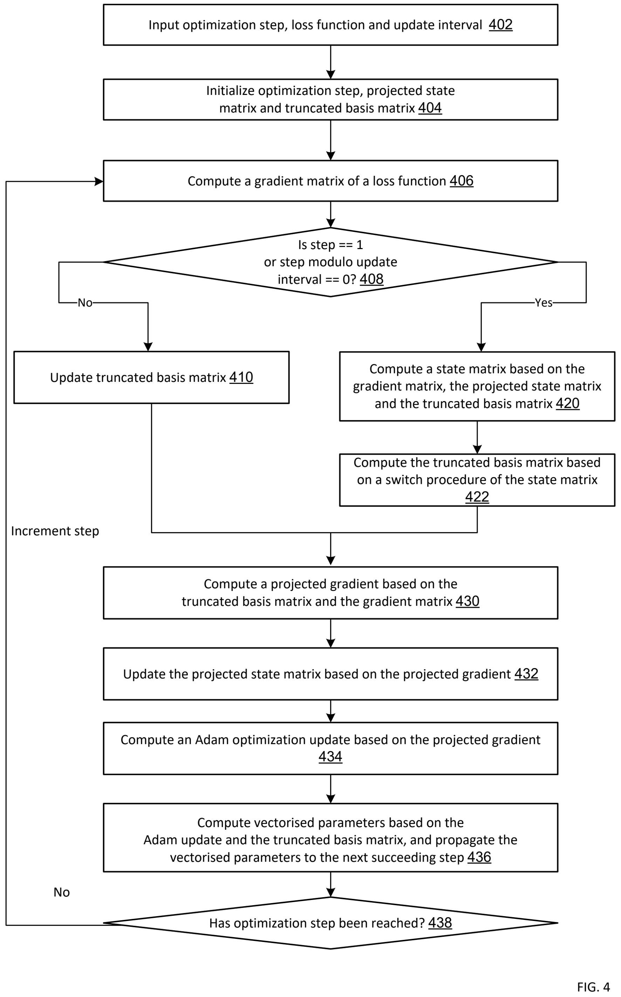

FIG. 4 shows a flow diagram illustration of an example algorithm 2 as implemented by the "Alice" optimizer. Further details of Algorithm 2 are provided below in pseudocode. At step 402, the Alice optimizer receives as input an optimization step T, a loss function $\mathcal{L}$ and an update interval $k$ as input. At step 404, the Alice optimizer initializes an optimization step t = 1 of T, a projected state matrix $\tilde{Q}$ = 0 and an truncated basis matrix U = 0. The algorithm is iterative in nature, meaning the description of t = 1 applies equally to t > 1 with outputs from step t - 1 becoming inputs to step t. At step 406, the optimizer computes a gradient matrix $G_t$ of the loss function $\mathcal{L}$. As per step 408, for every update interval $k$ of step t in addition to the first step t = 1, the optimizer computes a state matrix $Q_t$ and a truncated basis matrix $U_t$, at step 420 and step 422 respectively. Otherwise, where step t modulo update interval $k$ is not zero, the optimizer updates (410) the truncated basis matrix $U_t$ to the truncated basis matrix of the preceding step $U_{t-1}$. The optimizer computes the state matrix $Q_t$ in step 420 based on the gradient matrix $G_t$, the projected state matrix $\tilde{Q}$ and the truncated basis matrix U. The optimizer computes truncated basis matrix $U_t$ in step 422 based on a switch procedure of the state matrix $Q_t$. Whether proceeding from sterp 410 or 420, at step 430, the optimizer computes a projected gradient $\sigma_t$ based on the truncated basis matrix $\mathbf{U}_t^T$ with the gradient matrix $G_t$. At step 432, the optimizer updates the projected state matrix $\tilde{Q}_t$ based on the projected state matrix of the previous step $\tilde{Q}_{t-1}$ and the projected gradient $\sigma_t$. At step 434, the optimizer computes an Adam update in subspace $\Delta$ based on the projected gradient $\sigma_t$. At 436, the opimizer computes vectorised parameters $\theta_t$ based on the Adam update $\Delta$ and the truncated basis matrix U, and sets the computed vectorised parameters $\theta_t$ as the vectorised parameters for the succeeding step $\theta_{t+1}$. At step 438, the optimizer determines whether the optimization step T has been reached. If not, the optimization returns to step 406 and repeats with t = $t$ + 1. If so, the optimization terminates.

In the forthcoming framework, basic notations are considered. Vectorized gradient is $\vec{g}$ = $Vec(G)$ where $\mathbf{G} \in \mathbb{R}^{m \times n}$ is the matrix gradient and $Vec(\cdot)$ is to vectorize the input matrix by stacking the columns. When the input to $Diag(\cdot)$ is a sequence of matrix $M_1, ..., M_n$, it will arrange them into larger block diagonal matrix. If the input to $Diag(\cdot)$ is just one matrix, it will extract the diagonal element into a vector, and if the input is a vector, it will expand it to a diagonal matrix. $Diag_M(M)$ is the operation that expands the input to a larger diagonal matrix by taking each element of M in a column-wise manner and assigning it to the diagonals of the larger matrix. $\otimes$ indicates the Kronecker product. $EVD(M, r)$ indicates the stacking of top r eigenvectors ordered by the descending eigenvalues. If r is omitted, we keep all eigenvectors. QR(M) with orthonormal $\mathbf{M} \in \mathbb{R}^{m \times r}$ is to obtain the remaining m - r basis through QR decomposition. $\theta$ is the vectorized parameters.

By way of context, a unified view of existing optimizers is considered. In unifying existing optimizers, Adam and Shampoo, two classes of structural assumptions are considered, *block diagonal* and *Kronecker product,* with a reconstruction loss:

$$\min_{\tilde{\mathbf{F}} \in \mathcal{H}} \| \tilde{\mathbf{F}} - \mathbf{F} \|_F^2 \qquad (11)$$

where F is the empirical FIM, $\mathcal{H}$ is the family of matrices with certain structural assumptions. Here $\mathcal{H}$ is assumed to be a subset of symmetric positive definite (SPD) matrix. One criterion of the chosen structural assumption is that the resulting $\tilde{F}$ should enable efficient practical procedures.

**Block diagonal:** Block diagonal assumes $\tilde{F}$ = $Diag_M(M_1, ..., M_n)$ where $\mathbf{M}_i \in \mathbb{R}^{m \times m}$ is a SPD matrix. From Appendix D.2, block diagonals allows one to efficiently compute the square-root inverse, and translate expensive NGD involving $\tilde{\mathbf{F}} \in \mathbb{R}^{mn \times mn}$ into much cheaper computation involving $\mathbf{G} \in \mathbb{R}^{m \times n}$ .

**Kronecker product:** Another structural assumption $\tilde{F}$ = $R_n \otimes L_m$, where $\mathbf{R}_n \in \mathbb{R}^{n \times n}$ and $\mathbf{L}_m \in \mathbb{R}^{m \times m}$ and $R_n$ and $L_m$ are SPD matrices. The advantage of Kronecker product is that (1) it allows efficient computation of square-root inverse; and (2) matrix-vector product involving FIM can be simplified to matrix operations with smaller size, similar to block diagonal assumption. Note that *block diagonal* is not a sub-class of *Kronecker product* if each $M_i$ are different.

By way of further context, singular value editing (SVE) is considered. SVE is derived based on interpolating between Adam and general block diagonal assumption. However, SVE is too restrictive due to identical block matrix. Although SVE considers the off-diagonal element of FIM, it is not a strict generalization to Adam. In this section, the identical block assumption is relaxed and a further interpolation towards the general block diagonal is provided, leading to a strict generalization to Adam.

Instead, it is assumed $\tilde{F} = Diag(M_1, ..., M_n)$ with $\mathbf{M}_i \in \mathbb{R}^{m \times m} = \mathbf{U}\mathbf{D}_i\mathbf{U}^T$, where $\mathbf{U} \in \mathbb{R}^{m \times m}$ is an orthonormal matrix and $\mathbf{D_i}$ is a diagonal matrix with positive values. Adam and SVE are special cases by setting U = I and $\mathbf{D_i}$ = D respectively. The intuition behind this design is to make sure all blocks shares the same eigen-basis with varying eigenvalues.

**Update formula:** the above structure accommodates different blocks but it still leads to efficient update rule. Specifically:

$$\tilde{\mathbf{F}}^{-\frac{1}{2}} = Diag\left(\mathbf{U}\mathbf{D}_i^{-\frac{1}{2}}\mathbf{U}^T, ..., \mathbf{U}\mathbf{D}_n^{-\frac{1}{2}}\mathbf{U}^T\right) = (\mathbf{I_n} \otimes \mathbf{U})\tilde{\mathbf{D}}^{-\frac{1}{2}}(\mathbf{I_n} \otimes \mathbf{U})^{-\frac{1}{2}} \qquad (12\text{-}1)$$

where $\tilde{D} = Diag(D_1, ..., D_n)$. Due to the properties of Kronecker product and inverse of diagonal matrix (refer to Appendix D.2), the corresponding update is

$$Mat\left(\tilde{\mathbf{F}}^{-\frac{1}{2}}\vec{\mathbf{g}}\right) = \mathbf{U}\frac{\mathbf{U}^T\mathbf{G}}{\sqrt{Mat\left(Diag(\tilde{\mathbf{D}})\right)}}. \qquad (12\text{-}2)$$

where $\sqrt{\cdot}$ is the elementwise square root, and $Mat(Diag(.))$ is simply taking the diagonal of the input matrix and reshape it to the same size as G.

Directly minimizing a reconstruction loss requires a computationally expensive kernel principal component analysis (kernel PCA) problem (Appendix B.3).

With the above structural assumption, instead of directly solving Equation (11), the following 1-step refinement is considered: (1 assuming all $\mathbf{D_i}$ are equal, find the optimal U; (2) fix the U from (1) and find the optimal $D_i$. Step (1) admits analytic solution:

$$\mathbf{U} = EVD(\mathbb{E}[\mathbf{G}\mathbf{G}^T]). \quad (12\text{-}3)$$

and step (2) admits:

$$\tilde{\mathbf{D}} = Diag_M(\mathbb{E}[(\mathbf{U}^T\mathbf{G})^2]) \qquad (12\text{-}4)$$

*where* $^2$ is the element-wise square.

A framework is provided to extend the proposed optimizers into its low-rank counterpart. Considering the trade-off between generality and practical limitations, adapting Adamized c(s)ingular value editing (ACE) to low rank, referred to in the following description as "Alice". However, the same analysis can be adapted to Adamized-Shampoo (ASH) as well.

Various optimizations are used to reduce computational and memory overhead. Firstly, due to the computational cost of eigenvalue decomposition, U every K steps. This effectively partitions the total training iterations into different time blocks, each with the size *K*. Secondly, a low-rank U is chosen, namely, U $\in R$ $m \times r$ instead of $\mathbf{U} \in \mathbb{R}^{m \times m}$ with r $\ll$ m. This saves the memory cost of first and second moments. Thirdly, the EMA of GG$^T$ is based on low-rank approximations to save memory.

Denoting EMA states of GG$^T$ at time t as Q$_t$. It follows from the above analysis that a low-rank U that optimally reconstructs F is obtained by simply keeping the top r eigenvectors of Q$_t$ sorted by descending eigenvalues. Due to the **requirement 1,** U is obtained at the beginning of each time block and kept fixed during this period. Note that when K is not large, the dominant eigenvectors are fairly stable, allowing U to be a good approximation to the true optimal mapping.

For tracking Q$_t$, the same U is reused in some embodiments as the low rank mapping matrix, since it is a good approximation to the true optimal mapping (i.e. perform eigenvalue decomposition of Q$_t$ at every step) when the dominant eigenvectors are stable. In such embodiments, Q$_t$ is updated as

$$\tilde{\mathbf{Q}}_{t+1} = \beta_3\tilde{\mathbf{Q}}_t + (1 - \beta_3)\sigma_t\sigma_t^T$$

$$\widetilde{\mathbf{Q}}_{t+1} = \mathbf{U}\widetilde{\mathbf{Q}}_{t+1}\mathbf{U}^T \qquad\qquad (13)$$

where $\sigma_t = U^T G_t$ with shape $\mathbb{R}^{r\times n}$, and $\tilde{Q}_t$ is the projected state with shape $\mathbb{R}^{r\times r}$. Therefore, by this low-rank tracking, the memory consumption of the original $Q_t$ is reduced from $m^2$ to $r^2$. An alternative choice but more extreme choice is removing the tracking of $Q_t$ and only rely on the gradient at the beginning of each time block to obtain U. This completely removes the memory consumption of $Q_t$. This variant is referred to as Alice-0.

The aforementioned low-rank tracking inevitably creates the information loss, such that some of the eigenbasis will never be considered. However, incorporating these remaining basis explicitly will increase the memory consumption. This is the underlying reason why certain approaches switch between different subspaces for better performance. However, in contrast the present example, such conventional approaches all lack explicit mechanisms and analysis for switching.

**Subspace switching:** Assuming the setup mentioned above and all assumptions of ACE are satisfied. Low-rank $U \in \mathbb{R}^{m\times r}$ is obtained at the beginning of i + 1 time block by EVD(EVD ($Q_{ik}$, r)), and is fixed during time ik + 1, ..., (i + 1)k. Stability of the eigenbasis is assumed such that $G_t$ at i + 1 time block shares the same eigen-basis as $Q_{ik}$, yielding:

$$\mathbf{Q}_{(i+1)k} = \sum_{t=ik+1}^{(i+1)k} \mathbf{G}_t\mathbf{G}_t^T = \sum_{t=ik+1}^{(i+1)k} \widetilde{\mathbf{G}}_t\widetilde{\mathbf{G}}_t^T + \mathbf{U}_c\mathbf{\Sigma}_t\mathbf{U}_c^T$$

where $\tilde{G}_t = U\sigma_t$ is the low rank reconstructed gradients, $\mathbf{\Sigma} \in \mathbb{R}^{(m-r)\times(m-r)}$ is a diagonal matrix with positive values, and $U_c$ is the remaining eigenbasis such that $[U, U_c]$ will form the complete eigen-matrix of $Q_{ik}$.

The above analysis provides a useful practical intuition about what is happening searching the next U at the end of i + 1 block: The missing information due to low rank tracking of Q essentially boost-up the importance of the residual eigen-basis of the current U. This is expected intuitively since the residual basis are the ones that has not been exploited by the low-rank optimizer during this time block, so for next U, certain residual basis is added back for exploration. This is an example of "subspace switching" as the term is used herein. This mechanism identifies which part of the subspace to aim for. The following search strategy is certain embodiments:

$$\mathbf{U}' = [\mathbf{U}'_1, \mathbf{U}'_2] = EVD(\mathbf{Q}, r), \quad \mathbf{U}'_c = \mathrm{QR}(\mathbf{U}')$$

$$\mathbf{U}'_3 \sim \mathrm{Uniform}(\mathbf{U}'_c), \quad \mathbf{U} = [\mathbf{U}'_1, \mathbf{U}'_3] \qquad\qquad (14)$$

where Uniform(U'$_c$) is the uniform distribution over the columns of U'$_c$. This procedure will substitute some of the less important leading direction (U'$_2$) with the randomly sampled residual basis (U'$_3$), where QR is to quickly find the residual basis U'$_c$ of the leading direction U'.

In Algorithm 2 below, in training step t, the state matrix is denoted by $Q_t$ and the truncated basis matrix is denoted by $U_t$. The modified state matrix is denoted by $\tilde{Q}_t$, with $\tilde{Q}_{t-1}$ being the modified state matrix from training step t - 1.

**Algorithm 2** Alice/Alice-0 optimizer

**Input:** learning rate $\lambda$, scale $\alpha$, update interval $k, \beta_1, \beta_2, \beta_3 (\beta_3 = 0$ for Alice-0), optimization step $T$, rank $r$, loss function $\mathcal{L}$, size of : $\mathbf{U}'_1 : c$

$\widetilde{\mathbf{Q}} = 0, \ \mathbf{U} = \mathbf{0}$

**for** $t = 1 \dots, T$ **do**

$\quad \mathbf{G}_t = \nabla_\theta \mathcal{L}$

$\quad$ **if** $t == 1$ or $t \bmod K == 0$ **then**

$\qquad \% Reconstruct\ the\ states$

$\qquad \mathbf{Q}_t = \beta_3 \mathbf{U} \widetilde{\mathbf{Q}} \mathbf{U}^T + (1 - \beta_3) \mathbf{G}_t \mathbf{G}_t^T$

$\qquad \% Switch\ procedure\ as\ Equation\ (14)$

$\qquad \mathbf{U}_t = Switch(\mathbf{Q}_t, r, c)$

$\quad$ **else**

$\qquad \mathbf{U}_t = \mathbf{U}_{t-1}$

$\quad$ **end if**

$\quad \sigma_t = \mathbf{U}_t^T \mathbf{G}_t \qquad\qquad\qquad \triangleleft Projected\ gradient$

$\quad \widetilde{\mathbf{Q}}_t = \beta_3 \widetilde{\mathbf{Q}}_{t-1} + (1 - \beta_3) \sigma_t \sigma_t^T \qquad \triangleleft Low - rank\ tracking$

$\quad \Delta = Adam(\sigma_t, \beta_1, \beta_2) \qquad\qquad \triangleleft Adam\ update\ in\ subspace$

$\quad \theta_{t+1} = \theta_t = \lambda \alpha \mathbf{U} \Delta$

**end for**

In some embodiments, a compensation step is introduced after a truncated basis is used to compute a projected gradient. This step inserts an additional compensation term into an update, addressing the discarded directions from partial low-rank projections. A compensation matrix is computed based on a difference between a full-rank gradient and the truncated gradient, e.g. G - U(U$^T$G), preserving performance while maintaining memory efficiency.

In some embodiments, the compensation step is performed as follows: (1) compute a compensation matrix (C = G - UU$^T$G), where U is the truncated basis matrix; (2) compute an EMA of norm of C; (3) normalise the columns of C by a square root of the EMA of the norm; (4) scale this term by an additional constant ($\alpha$) and add it to the low-rank weight updated matrix to form the final weight update.

One approach uses an exponential moving average of the norm of a compensation matrix to stabilize the update across multiple training steps. The compensation step reintroduces omitted directions through a separate adjustment, thereby retaining key characteristics of a full-rank update. By selectively restoring crucial variations, this technique counters any performance drop resulting from the low-rank approximation. During each iteration, a dynamic scaling factor can be computed to regulate the magnitude of the compensation term. If an adaptive threshold is exceeded, the update is dampened, helping maintain stable training. Over time, the compensation step adapts to changes in gradient characteristics, providing a flexible mechanism for reconciling memory savings with robust model convergence.

In some such embodiments, a truncated basis matrix U is used to project a gradient G into a lower-dimensional space. In some embodiments, a compensation matrix $C_t$ is subsequently computed as the difference between the original gradient and its projected counterpart, e.g. $C = G - U(U^T G)$. By incorporating a scaled version of C into an update, the discarded components are selectively reintroduced. A dynamic factor may be determined at each training step to modulate the magnitude of C, reducing the risk of instability from large overlooked directions. In some such embodiments, a resulting weight update $\Delta$ is represented as a sum of a primary low-rank contribution $U(U^T G)$ and a compensation term $\mathbf{U}_c(\mathbf{U}_c^T \mathbf{G})$, where $U_c$ is a matrix of orthonormal directions orthogonal to U. This ensures that omitted directions from the truncated projection are partially restored through $U_c$, while preserving memory efficiency. By applying an exponential moving average to the norm of C over multiple iterations, this process adaptively regulates the compensation term and stabilizes training performance.

A further aspect herein provides a computer system comprising a memory embodying computer-readable instructions, and a processor coupled to the memory, the computer-readable instructions configured, when executed on the processor, to cause the computer system to implement the method of any aspect or embodiment disclosed herein. A further aspect provides a computer-readable storage medium embodying such computer-readable instructions.

The training methods and optimization methods described herein have many practical applications in various fields of technology. In particular, such methods can be used to train an ML model for use in a variety of technical field. In the following description, a trained ML model refers to an ML model trained using one or more of the techniques described herein. In some training setups, an ML model is trained using one of these techniques based on a training set comprising training data specific to one or more technical fields, such as image data, video data, audio data (e.g., speech data), sensor data (e.g., physiological measurements, measurements from monitoring sensors, such as temperature, pressure), genomic data (e.g., DNA samples) etc.

One example use case is training a generative model. Generative language models (LMs), such as large language models (LLMs) and small language models, generative foundation models and other generative models (GMs), have seen significant advancements in recent years. Generative models are a class of machine learning model(s) and are capable of generating new data instances. More formally, such models are trained to estimate a joint probability distribution over inputs and outputs from which new outputs can be sampled. A characteristic of many modern GMs is their general applicability, meaning they can, to varying degrees, be usefully applied at inference to tasks on which they have not been specifically trained. Such GMs, once trained, are therefore able to support a wide range of applications. In other uses cases, the techniques are used to train a discriminative model, such as a discriminative LM (e.g. LLM or SLM) etc.

The described techniques are particularly beneficial for training large models where large in this context means of a size that current hardware constraints are a limiting factor in training. Note, this encompasses models that might be described as "small" in other contexts (such as "small" language models that typically still have billions of parameters).

Examples of model architectures to which the described training methods can be applied include GPT-3, GPT-3.5 turbo, GPT-4, GPT Omni (e.g., GPT-4o) BERT, DALL-E 3, CLIP, Stable Diffusion, Gato, LLAMA, Falcon, and Gemini, as well as future developments thereof. Examples of multi-modal models include GPT-4, GPT-4o, CLIP and Gato, while Stable Diffusion is primarily used for image generation. Direct audio-to-audio models are being developed.

A trained ML model has many practical applications in various fields of technology. In broad terms, a trained ML model could, for example, be configured as a declarative network, used for, say, classification or regression tasks (a declarative network, broadly speaking, learns to generate predictions on previously unseen data), or a generative network (which, broadly speaking, has the ability to generate new datapoints). Applications of a trained ML model include: image classification or extracting information from images (e.g., classifying images, image regions, or image pixels; locating objects in images, e.g., by predicting object bounding boxes, etc.); text classification; the extraction of structured or semi-structured information from text; audio signal classification (e.g., classifying different parts of an audio signal, e.g., in the context of voice recognition, to separate speech from non-speech, or to convert speech to text); extracting information from sensor signals, e.g., performing measurements using a classification or regression network operating on signals from one or more sensors, for example, in a machine control application (e.g., such measurements may be used to measure physical characteristics of or relevant to a machine or system such as a vehicle, robot, manufacturing system, energy production system, etc.), or in a medical sensing application such as patient monitoring or diagnostics (e.g., to monitor and classify a patient's vitals). Other applications include generating images (e.g., based on a text or non-text input), text (e.g., translating text from one language to another, or generating a response to a user's text input), audio data (e.g., synthetic speech, music, or other sounds) or music (e.g., in digital or symbolic music notation), computer code that may be executed on a processor (e.g., computer code to control or implement a technical process on a computer or machine, e.g., generating code in response to a user's instructions express in natural language, translating or compiling code, such as source code, object code or machine code, from one programming language to another); and modeling or simulation of physical, chemical, and other technical systems, or discovering new chemical components or new uses thereof (including 'drug discovery' applications, to discover new therapeutic compounds or medicines, or new therapeutic uses). Any of the aforementioned applications, among others, may be improved in terms of performance (e.g., accuracy, precision, robustness/reliability) when supported by a trained ML model. The system also has applications in cybersecurity. In some use-cases, a trained ML model supports carrying out a cybersecurity function, such as identifying anomalous or potentially suspicious data points or signals in cybersecurity data (which may, for example, embody cybersecurity telemetry collected using endpoint software and/or network monitoring component(s), etc.), or patterns indicative of potentially suspicious activity or behavior, so that an appropriate reporting, remediation, or other cybersecurity action may be taken (e.g., generating an alert; terminating or quarantining an application, service, or process; revoking user or application privileges; etc.) based on an output of the ML model (e.g., a detection output indicating potentially suspicious activity/behavior that has been detected, or another form of cybersecurity detection outcome). A generative cybersecurity model may, for example, be configured to generate 'synthetic' cybersecurity data, e.g., for the purpose of training, testing, or validating other cybersecurity component(s) and model(s). Another example application is generating an industrial output (e.g., for controlling or configuring an industrial machine, such as a manufacturing machine). Another example application is advanced engineering, in which a model output is used to detect, diagnose and/or mitigate machine or system faults, or to design or manufacture (or assist in the design or manufacture of) a machine or other technical system. Another application is system optimization, for example detecting and mitigating performance issues (e.g. runtime performance issues) in a computer or computer system, or optimizing usage of resources (such as computational resources or memory resources) based on an ML analysis of a software or hardware system.

As further examples, in various example use cases, the techniques described herein are used to train an ML model to control a specific technical system or process, e.g. an X-ray apparatus or a steel cooling process; determine from measurements a required number of passes of a compaction machine to achieve a desired material density; enhance or analyze digital audio, image or video enhancement or analysis, e.g. de-noising, detecting persons in a digital image, estimating the quality of a transmitted digital audio signal; perform separation of sources in speech signals; perform speech recognition, e.g. mapping a speech input to a text output; encode data for reliable and/or efficient transmission or storage (and corresponding decoding), e.g. error-correction coding of data for transmission over a noisy channel, compression of audio, image, video or sensor data; optimize load distribution in a computer network; determine energy expenditure of a subject by processing data obtained from physiological sensors; deriving a body temperature of a subject from data obtained from an ear temperature detector; provide a genotype estimate based on an analysis of DNA samples, as well as providing a confidence interval for this estimate so as to quantify its reliability; provide an automated medical diagnosis by processing physiological measurements; process signals from a heart monitoring apparatus to identify irregular heartbeats; or classify or otherwise analyze digital images, videos, audio or speech signals based on low-level features (e.g. edges or pixel attributes for images).

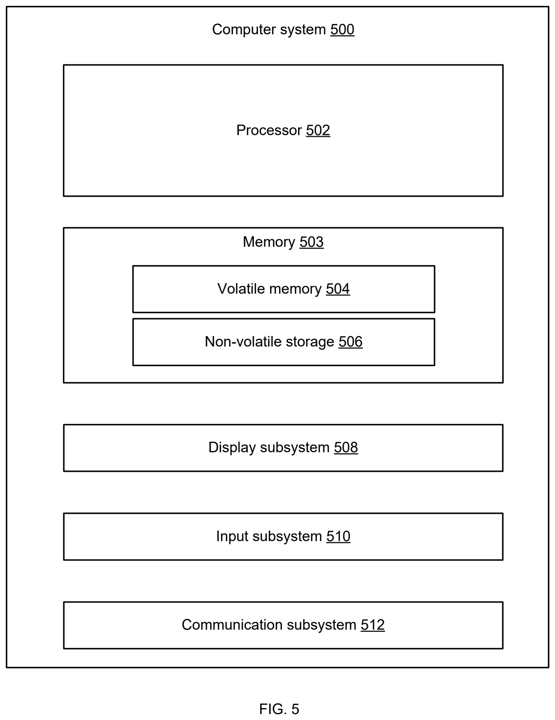

FIG. 5 schematically shows an example of a computer system 500, such as a computing device or system of connected computing devices configured in various embodiments to implement any of the methods described herein.

The computer system 500 is shown in simplified form. The computer system 500 comprises a processor 502 and a memory 503. In this example, the memory 503 is shown to comprise volatile memory 504 and a non-volatile storage 506. In this example, the computer system 500 includes a display subsystem 508, an input subsystem 510, and a communication subsystem 512. In other examples, one, some or all of these components 508, 510, 512 are omitted. The processor 502 comprises one or more hardware processing units configured to carry out processing operations. A hardware processing unit may be programmable or non-programmable. Certain hardware processing units are configured to execute computer-readable instructions based on an instruction set architecture. Examples of such a hardware processing unit include a central processing unit (CPU), graphics processing unit (GPU), tensor processing unit (TPU), neural processing unit (NPU), intelligence processing unit (IPU) or other form of accelerator processing unit. Such hardware processing units may be single-core or multi-core, and instructions executed thereon may be configured for sequential, parallel, and/or distributed processing. Other examples of such hardware processing units include a field-programmable gate array (FPGAs) or a non-programmable fixed-logic circuit, such as an application-specific integrated circuit (ASIC). The processor 502 is contained in a single device in some examples. Individual components of the processor 502 are distributed among two or more separate devices in other examples. In some such examples, such devices are remotely located from each other and/or configured for coordinated processing. The non-volatile storage 506 includes one or more physical devices configured to hold data and/or computer-readable instructions executable by the processor 502. Examples of non-volatile storages include optical memory (e.g., CD, DVD, HD-DVD, Blu-Ray Disc, etc.), semiconductor memory (e.g., ROM, EPROM, EEPROM, FLASH memory, etc.), magnetic memory (e.g., hard-disk drive), or other mass storage device technology. The volatile memory 504 includes one or more physical devices that include random access memory in some examples. The volatile memory 504 is typically utilized by processor 502 to temporarily store data and/or instructions during processing. The terms "module," "program," and "engine" are used to describe particular functionality of the computer system 500 implemented in hardware or software. In some examples, a software module, program, or engine is instantiated via the processor 502 executing instructions held by non-volatile storage 506, using portions of the volatile memory 504. Different modules, programs, and/or engines are instantiated from the same application, service, code block, object, library, routine, API, function, etc. in some examples. In other examples, the same module, program, and/or engine are instantiated by different applications, services, code blocks, objects, routines, APIs, functions, etc. The terms "module," "program," and "engine" encompass among other things individual or groups of executable files, data files, libraries, drivers, scripts, database records, etc. The display subsystem 508 is configurable to present a visual representation of data such as data held by the non-volatile storage 506. The visual representation takes the form of a graphical user interface (GUI) in some examples. The display subsystem 508 includes one or more display devices utilizing virtually any type of technology. Such display devices are combined with processor 502, volatile memory 504, and/or non-volatile storage 506 in a shared enclosure in some examples. In other examples, such display devices are peripheral display devices. The input subsystem 510 comprises or interfaces with one or more input devices such as user-input devices such as a keyboard, mouse, touch screen, or game controller. In some embodiments, the input subsystem 510 comprises or interfaces with selected natural user input (NUI) componentry. Such componentry may be integrated or peripheral, and the transduction and/or processing of input actions may be handled on-board or off-board. Examples of NUI componentry include without limitation a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity; and/or any other suitable sensor. The communication subsystem 512 is configured to communicatively couple the computer system 500 to another device or system. The communication subsystem 512 may include wired and/or wireless communication devices compatible with one or more different communication protocols. In some examples, the communication subsystem 512 allows computer system 500 to send and/or receive messages to and/or from other devices via a communication network such as the internet. The term computer readable media as used herein includes for example computer storage media. Computer storage media includes for example volatile and non-volatile, removable and nonremovable media (e.g., volatile memory 504 or non-volatile storage 506). Computer storage media includes for example solid-state storage, RAM, ROM, electrically erasable read-only memory (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information, and which can be accessed by a computing device (e.g., the computer system 500 or a component device thereof). Computer storage media does not include a carrier wave or other propagated or modulated data signal. Communication media is embodied by computer readable instructions, data structures, program modules, or other data in a modulated data signal, such as a carrier wave or other transport mechanism, and includes any information delivery media. The term "modulated data signal" describes a signal that has one or more characteristics set or changed in such a manner as to encode information in the signal. Examples of communication media include without limitation wired media such as a wired network or direct wired connection, and wireless media such as acoustic, radio frequency (RF), infrared, and other wireless media.

A first aspect provides a computer-implemented method of training a machine learning (ML) model, the method comprising computing a first gradient vector of a training loss function with respect to a first weight vector of the ML model, computing a second gradient vector of the training loss function with respect to a second weight vector of the ML model, applying, to the first gradient vector and the second gradient vector, a whitening transformation resulting in a first whitened gradient vector and a second whitened gradient vector, calculating an updated first weight vector based on the first weight vector and the first whitened gradient vector, calculating an updated second weight vector based on the second weight vector and the second whitened gradient vector, and generating a trained ML model based on the updated first weight vector and the updated second weight vector.

In embodiments, the method comprises performing, using the trained ML model, a task of extracting information from an image, extracting information from an audio signal, extracting information from a sensor signal, controlling a machine operation, generating executable computer code, generating an image, generating an audio signal, or performing a cybersecurity analysis.

In embodiments, the first gradient vector is a first normalized gradient vector, and the second gradient vector is a second normalized gradient vector, the method comprises computing a first unnormalized gradient vector of the training loss function with respect to the first weight vector of the ML model, computing a second unnormalized gradient vector of the training loss function with respect to the second weight vector of the ML model, and applying, to the first unnormalized gradient vector and the second unnormalized gradient vector, a normalizing transformation resulting in the first normalized gradient vector and the second normalized gradient vector.

In embodiments, the whitening transformation is applied to a normalized gradient matrix comprising the first normalized gradient vector and the second normalized gradient vector, resulting in a whitened gradient matrix comprising the first whitened gradient vector and the second whitened gradient vector.

In embodiments, the whitened gradient matrix is a matrix product between orthogonal matrices defined via a singular value decomposition (SVD) of the normalized gradient matrix.

In embodiments, the matrix product is computed approximately without individually computing the orthogonal matrices.

In embodiments, the ML model is a transformer.

A second aspect provides a computer system for training a machine learning (ML) model, the computer system comprising a memory embodying computer-readable instructions and a processor coupled to the memory, the computer-readable instructions configured, when executed on the processor, to cause the computer system to implement operations comprising computing a gradient matrix of a training loss function with respect to a weight matrix of the ML model, applying, to the gradient matrix, a whitening transformation resulting in a whitened gradient matrix, calculating an updated weight matrix based on the weight matrix and the whitened gradient matrix, and generating a trained ML model based on the updated weight matrix.

In embodiments, the whitened gradient matrix is a matrix product between orthogonal matrices defined via a singular value decomposition (SVD) of the gradient matrix.

In embodiments, the matrix product is computed approximately without individually computing the orthogonal matrices.

In embodiments, the gradient matrix is a normalized gradient matrix, the operations further comprise computing an unnormalized gradient matrix of the training loss function with respect to the weight matrix, and applying, to the unnormalized gradient matrix, a normalizing transformation resulting in the normalized gradient matrix.

In embodiments, the computer system further comprises performing, using the trained ML model, a task of extracting information from an image, extracting information from an audio signal, extracting information from a sensor signal, controlling a machine operation, generating executable computer code, generating an image, generating an audio signal, or performing a cybersecurity analysis.

A third aspect provides a computer-readable storage medium embodying computer-readable instructions for training a machine learning (ML) model, the computer-readable instructions being configured so as, when executed on a processor, to cause performance of operations comprising computing a gradient of a training loss function with respect to a weight of the ML model, determining, based on the gradient, a state matrix of rank m, generating a truncated basis matrix of r selected basis vectors where r is less than m, the truncated basis matrix comprising a first basis vector, which is one of r principal eigenvectors of the state matrix, and a second randomly-selected basis vector which is orthogonal to the r principal eigenvectors, calculating an updated weight based on the weight, the gradient, and the truncated basis matrix, and generating a trained ML model based on the updated weight.

In embodiments, the operations comprise determining a projected gradient based on the gradient and the truncated basis matrix, wherein the updated weight is calculated based on the weight and the projected gradient.

In embodiments, the updated weight is calculated based on the weight, the projected gradient, and: an earlier projected gradient stored from an earlier training step, or an exponential moving average (EMA) computed based on the earlier projected gradient.

In embodiments, the operations comprise generating the r principal eigenvectors of the state matrix, and selecting c leading principal eigenvectors from the r principal eigenvectors where c is less than r, wherein the truncated basis matrix comprises the c leading principal eigenvectors and r-c randomly-selected basis vectors orthogonal to the r principal eigenvectors.

In embodiments, the state matrix is determined based on an earlier gradient computed in an earlier training step.

In embodiments, the operations comprise computing a modified state matrix based on the projected gradient and an earlier modified state matrix computed in an earlier training step.

In embodiments, the second randomly-selected basis vector is not an eigenvector of the state matrix.

In embodiments, the operations further comprise performing, using the trained ML model, a task of extracting information from an image, extracting information from an audio signal, extracting information from a sensor signal, controlling a machine operation, generating executable computer code, generating an image, generating an audio signal, or performing a cybersecurity analysis.

A further aspect provides a computer system for training a machine learning (ML) model, the computer system comprising a memory embodying computer-readable instructions; and a processor coupled to the memory, the computer-readable instructions configured, when executed on the processor, to cause the computer system to implement operations comprising: computing a gradient matrix of a training loss function with respect to a weight matrix of the ML model; applying, to the gradient matrix, a transformation that decorrelated the gradient matrix across multiple dimensions of the gradient matrix, resulting in a transformed gradient matrix; calculating an updated weight matrix based on the weight matrix and the transformed gradient matrix; and generating a trained ML model based on the updated weight matrix.

In embodiments, the transformed gradient matrix is a matrix product between orthogonal matrices defined via a singular value decomposition (SVD) of the gradient matrix.

The embodiments described above are illustrative and not exhaustive. Further embodiments are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the present disclosure. The scope is not defined by the described embodiments but only by the accompanying claims.

**Claims**

1. A computer-implemented method of training a machine learning (ML) model, the method comprising:

   computing a first gradient vector of a training loss function with respect to a first weight vector of the ML model (206);
   computing a second gradient vector of the training loss function with respect to a second weight vector of the ML model (206);
   applying, to the first gradient vector and the second gradient vector, a whitening transformation, resulting in a first whitened gradient vector and a second whitened gradient vector (210);
   calculating an updated first weight vector based on the first weight vector and the first whitened gradient vector (212);
   calculating an updated second weight vector based on the second weight vector and the second whitened gradient vector (212); and
   generating a trained ML model based on the updated first weight vector and the updated second weight vector (216).

2. The method of claim 1 comprising performing, using the trained ML model, a task of:

   extracting information from an image,
   extracting information from an audio signal,
   extracting information from a sensor signal,
   controlling a machine operation,
   generating executable computer code,
   generating an image,
   generating an audio signal, or
   performing a cybersecurity analysis.

3. The method of claim 1 or 2, wherein the first gradient vector is a first normalized gradient vector, and the second gradient vector is a second normalized gradient vector, the method comprising:

   computing a first unnormalized gradient vector of the training loss function with respect to the first weight vector of the ML model;
   computing a second unnormalized gradient vector of the training loss function with respect to the second weight vector of the ML model; and
   applying, to the first unnormalized gradient vector and the second unnormalized gradient vector, a normalizing transformation, resulting in the first normalized gradient vector and the second normalized gradient vector (208).

4. The method of claim 3, wherein the whitening transformation is applied to a normalized gradient matrix comprising the first normalized gradient vector and the second normalized gradient vector, resulting in a whitened gradient matrix comprising the first whitened gradient vector and the second whitened gradient vector.

5. The method of claim 4, wherein the whitened gradient matrix is a matrix product between orthogonal matrices defined via a singular value decomposition (SVD) of the normalized gradient matrix.

6. The method of claim 5, wherein the matrix product is computed approximately without individually computing the orthogonal matrices.

7. A computer system for training a machine learning (ML) model, the computer system comprising:

   a memory embodying computer-readable instructions; and

a processor coupled to the memory, the computer-readable instructions configured, when executed on the processor, to cause the computer system to implement operations comprising:

computing a gradient matrix of a training loss function with respect to a weight matrix of the ML model;
applying, to the gradient matrix, a transformation that decorrelates the gradient matrix across multiple dimensions of the gradient matrix, resulting in a transformed gradient matrix;
calculating an updated weight matrix based on the weight matrix and the transformed gradient matrix; and
generating a trained ML model based on the updated weight matrix.

8. The computer system of claim 7, wherein the gradient matrix is a normalized gradient matrix, the operations further comprising:

computing an unnormalized gradient matrix of the training loss function with respect to the weight matrix; and
applying, to the unnormalized gradient matrix, a normalizing transformation, resulting in the normalized gradient matrix.

9. A computer-readable storage medium embodying computer-readable instructions for training a machine learning (ML) model, the computer-readable instructions being configured so as, when executed on a processor, to cause performance of operations comprising:

computing a gradient of a training loss function with respect to a weight of the ML model;
determining, based on the gradient, a state matrix of rank m;
generating a truncated basis matrix of r selected basis vectors where r < m, the truncated basis matrix comprising:

a first basis vector, which is one of r principal eigenvectors of the state matrix, and
a second randomly-selected basis vector which is orthogonal to the r principal eigenvectors;
calculating an updated weight based on the weight, the gradient, and the truncated basis matrix; and
generating a trained ML model based on the updated weight.

10. The computer-readable storage medium of claim 9, the operations comprising determining a projected gradient based on the gradient and the truncated basis matrix, wherein the updated weight is calculated based on the weight and the projected gradient.

11. The computer-readable storage medium of claim 9 or 10, wherein the updated weight is calculated based on the weight, the projected gradient and:

an earlier projected gradient stored from an earlier training step, or
an exponential moving average (EMA) computed based on the earlier projected gradient.

12. The computer-readable storage medium of any of claims 9 to 11, comprising:

generating the r principal eigenvectors of the state matrix; and
selecting c leading principal eigenvectors from the r principal eigenvectors where c < r, wherein the truncated basis matrix comprises the c leading principal eigenvectors and r - c randomly-selected basis vectors orthogonal to the r principal eigenvectors.

13. The computer-readable storage medium of claim 12, wherein the state matrix is determined based on an earlier gradient computed in an earlier training step.

14. The computer-readable storage medium of claim 13, comprising computing a modified state matrix based on the projected gradient and an earlier modified state matrix computed in an earlier training step.

15. The computer-readable storage medium of claim 9, wherein the second randomly-selected basis vector is not an eigenvector of the state matrix.

Input vector $\underline{X}1$

Weight vector $\underline{W}1$    Weight Vector Wn

$$
\underline{X} = \begin{pmatrix} X_{11} & \cdots & X_{1m} \\ \vdots & & \vdots \\ X_{n1} & \cdots & X_{nm} \end{pmatrix} \quad \underline{W} = \begin{pmatrix} W_{11} & \cdots & W_{1n} \\ \vdots & & \vdots \\ W_{m1} & \cdots & W_{mn} \end{pmatrix} = Y
$$

Layer transformation

Input vector $\underline{X}n$

$\underline{G}$

$$
-\nabla_{\underline{w}}\mathcal{L}(\underline{W}) = \begin{pmatrix} -\dfrac{\partial}{\partial W_{11}}\mathcal{L}(W) & \cdots & -\dfrac{\partial}{\partial W_{1n}}\mathcal{L}(W) \\ \vdots & & \vdots \\ -\dfrac{\partial}{\partial W_{m1}}\mathcal{L}(W) & \cdots & -\dfrac{\partial}{\partial W_{mn}}\mathcal{L}(W) \end{pmatrix}
$$

Gradient vector $g_1$    Gradient vector $g_n$

Correlated

$\Delta\underline{W}$

Grad Whitening ($\underline{G}$) =

$$
\begin{pmatrix} \Delta W_{11} & \cdots & \Delta W_{1n} \\ \vdots & & \vdots \\ \Delta W_{n1} & \cdots & \Delta W_{mn} \end{pmatrix}
$$

Whitened gradient vector $\Delta\underline{W}_1$    Whitened gradient vector $\Delta\underline{W}_n$

Uncorrelated

Update:

$\underline{W} \leftarrow \underline{W} + \eta\Delta\underline{W}$

FIG. 1

FIG. 1 (cont.)

```
┌─────────────────────────────────────┐
│        Input weight matrix 202       │
└─────────────────────────────────────┘
                   │
                   ▼
┌─────────────────────────────────────┐
│          Initialise step 204         │
└─────────────────────────────────────┘
                   │
                   ▼
┌─────────────────────────────────────┐
│  Compute a gradient matrix of a loss │◄──────────┐
│  function based on the weight matrix │           │
│                 206                  │           │
└─────────────────────────────────────┘           │
                   │                               │
                   ▼                               │
┌─────────────────────────────────────┐           │
│  Compute a normalized gradient matrix│           │
│  based on the gradient matrix by     │           │
│  applying a GradNorm operator to     │           │
│  smooth mini-batch noise without     │           │
│  using past gradients 208            │           │
└─────────────────────────────────────┘           │
                   │                               │
                   ▼                               │
┌─────────────────────────────────────┐           │
│  Compute a whitened gradient matrix  │           │
│  based on the normalized gradient    │    Increment step
│  matrix by applying a GradWhitening  │           │
│  operator to cancel out local        │           │
│  geometric dependencies 210          │           │
└─────────────────────────────────────┘           │
                   │                               │
                   ▼                               │
┌─────────────────────────────────────┐           │
│     Calculate updated weight matrix  │           │
│     based on the weight matrix and   │           │
│     the whitened gradient matrix 212 │           │
└─────────────────────────────────────┘           │
                   │                               │
                   ▼                               │
              ╱──────────╲                         │
            ╱  Has        ╲          No            │
           ╱   convergence  ╲────────────────────►─┘
           ╲  criteria been ╱
            ╲  met? 214   ╱
              ╲──────────╱
                   │
                  Yes
                   │
                   ▼
┌─────────────────────────────────────┐
│     Return updated weight matrix 216 │
└─────────────────────────────────────┘
```

FIG. 2A

(a) 350M model pretraining

(b) 1.3B model Pretraining

(c) End-to-end memory footprint

(d) Throughput w/o distributed processing

FIG. 2B

EP 4 760 601 A1

Subspace Sampling

FIG. 3

Input optimization step, loss function and update interval 402

Initialize optimization step, projected state matrix and truncated basis matrix 404

Compute a gradient matrix of a loss function 406

Is step == 1 or step modulo update interval == 0? 408

No

Yes

Update truncated basis matrix 410

Compute a state matrix based on the gradient matrix, the projected state matrix and the truncated basis matrix 420

Compute the truncated basis matrix based on a switch procedure of the state matrix 422

Increment step

Compute a projected gradient based on the truncated basis matrix and the gradient matrix 430

Update the projected state matrix based on the projected gradient 432

Compute an Adam optimization update based on the projected gradient 434

Compute vectorised parameters based on the Adam update and the truncated basis matrix, and propagate the vectorised parameters to the next succeeding step 436

No

Has optimization step been reached? 438

FIG. 4

Computer system 500

Processor 502

Memory 503

Volatile memory 504

Non-volatile storage 506

Display subsystem 508

Input subsystem 510

Communication subsystem 512

FIG. 5

Europäisches
Patentamt

European
Patent Office

Office européen
des brevets

## EUROPEAN SEARCH REPORT

**Application Number**

EP 25 22 0333

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YANG ET AL: "Principal whitened gradient for information geometry", NEURAL NETWORKS. ELSEVIER SCIENCE PUBLISHERS, BARKING., GB, vol. 21, no. 2-3, 17 December 2007 (2007-12-17), pages 232-240, XP022526414, ISSN: 0893-6080, DOI: 10.1016/J.NEUNET.2007.12.016 [retrieved on 2007-12-17] | 1-8 | INV. G06N3/09 G06N3/084 ADD. G06N3/045 G06N3/0475 G06N3/048 G06N5/01 |
| A | * the whole document * | 9-15 | |
| X | JIAWEI ZHAO ET AL: "GaLore: Memory-Efficient LLM Training by Gradient Low-Rank Projection", ARXIV.ORG CORNELL UNIVERSITY LIBRARY, 201 OLIN LIBRARY CORNELL UNIVERSITY ITHACA, NY 14853, 2 June 2024 (2024-06-02), XP091775246, | 9-15 | |
| A | * the whole document * | 1-8 | |

**TECHNICAL FIELDS SEARCHED (IPC)**

G06N

The present search report has been drawn up for all claims

| Place of search | Date of completion of the search | Examiner |
|---|---|---|
| The Hague | 1 April 2026 | Papadakis, Georgios |

EPO FORM 1503 03.82 (P04C01)